(19)

Europäisches
Patentamt
European
Patent Office
Office européen
des brevets

(11) **EP 4 053 688 A1**

(12) **EUROPEAN PATENT APPLICATION**
published in accordance with Art. 153(4) EPC

(43) Date of publication:
**07.09.2022 Bulletin 2022/36**

(21) Application number: **20892299.7**

(22) Date of filing: **11.11.2020**

(51) International Patent Classification (IPC):
***G06F 3/0481*** *(2022.01)*

(86) International application number:
**PCT/CN2020/128000**

(87) International publication number:
**WO 2021/104015 (03.06.2021 Gazette 2021/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.11.2019 CN 201911203234**

(71) Applicant: **Huawei Technologies Co., Ltd.
Shenzhen, Guangdong 518129 (CN)**

(72) Inventors:
• **TAN, Yuchao**
**Shenzhen, Guangdong 518129, (CN)**
• **MA, Zhongqi**
**Shenzhen, Guangdong 518129, (CN)**
• **TANG, Zhao**
**Shenzhen, Guangdong 518129, (CN)**
• **QIAN, Shen**
**Shenzhen, Guangdong 518129, (CN)**

(74) Representative: **MERH-IP Matias Erny Reichl
Hoffmann
Patentanwälte PartG mbB
Paul-Heyse-Strasse 29
80336 München (DE)**

(54) **METHOD FOR SINGLE HAND OPERATION AND ELECTRONIC APPARATUS**

(57)     A one-hand operation method and an electronic device are provided. The method includes: displaying a first interface, where the interface is a user interface displayed on a screen; detecting a first trigger operation of a user; and displaying a floating interface based on the first trigger operation. After the user enables a "floating screen" function, the electronic device determines, based on an obtained length of a thumb of the user and an obtained position at which the user holds the electronic device, a region that can be operated by the user with one hand, and then presents the floating interface in the region, to facilitate the user to perform an operation.

FIG. 5

**EP 4 053 688 A1**

**Description**

This application claims priority to Chinese Patent Application No. 201911203234.5, filed with China National Intellectual Property Administration on November 29, 2019 and entitled "ONE-HAND OPERATION METHOD AND ELECTRONIC DEVICE", which is incorporated herein by reference in its entirety.

**TECHNICAL FIELD**

The present invention relates to the field of terminal technologies, and in particular, to a one-hand operation method and an electronic device.

**BACKGROUND**

With evolution and innovation of science and technologies, a terminal is used more widely. However, a user interface (user interface, UI) of the terminal adapts to a screen size of the terminal. For a terminal with a relatively large screen, when some users operate the terminal, it may be inconvenient to tap the screen because a palm is too small (for example, an accidental touch is caused due to unreachability). In an existing one-hand operation mode, a UI of the terminal can only be scaled down to a fixed size, and a location of the scaled-down UI is fixed, or a size of the UI is manually set by the user, and automatic scaling cannot be performed by the user.

**SUMMARY**

The following technical solutions are used in embodiments of this application.
According to a first aspect, this application provides a one-hand operation method, performed by an electronic device. The method includes: displaying a first interface, where the first interface occupies an entire screen of the electronic device; detecting a first trigger operation of a user; and displaying a floating interface based on the first trigger operation. A size of the floating interface is less than a size of the first interface. The floating interface is located in a first region in which the user performs a one-hand operation on the screen. The first region is determined by a position at which the user holds the electronic device and a length of a thumb of the user. The first interface is a screen UI of the mobile phone. The floating interface is an interface displayed when the user enables a "floating screen" function. The first trigger operation is that the user enables the "floating screen" function. The first region is a region that can be operated by the user on the screen when the user performs a one-hand operation, namely, a comfort zone.
In this embodiment of this application, in a process in which the user uses the electronic device with one hand, when a finger of the user cannot perform an operation at any position on the screen of the electronic device, the "floating screen" function is enabled. A comfort zone is calculated by obtaining the length of the thumb of the user and the position at which the user holds the electronic device. The comfort zone is a region that can be operated by the finger of the user on the screen. Then, the floating interface is displayed in the comfort zone, and the user performs an operation on the floating interface, so that the user can operate a large-screen device with one hand.
In another possible implementation, the method further includes: when the floating interface is a scaled-down first interface, skipping displaying the first interface on the screen.
In this embodiment of this application, the floating interface is a scaled-down screen UI. If content displayed on the floating interface is the same as content displayed on the screen UI or is content to be displayed on the screen UI, no content may be displayed on the original screen UI. In other words, a region other than the floating interface on the screen is a black screen, to reduce power consumption and avoid interfering with user attention due to the content displayed on the screen UI.
In another possible implementation, before the displaying a floating interface, the method further includes: enabling at least one camera, and prompting the user to photograph an image of a hand. Obtaining the length of the thumb of the user includes: calculating the length of the thumb based on the image of the hand.
In this embodiment of this application, a manner of obtaining the length of the thumb is as follows: When the user enables the "floating screen" function for the first time or sets the "floating screen" function (for example, sets a gesture for triggering enabling), the user is prompted to enable the camera. When the camera is enabled, the image of the hand of the user is obtained by using the camera, and then the length of the thumb of the user is calculated based on the image of the hand. After the length of the thumb is obtained, the length of the thumb is stored in a memory, so that the user does not need to obtain the length of the thumb when subsequently enabling the "floating screen" function again.
In addition, it is considered that it is inconvenient for the user to perform an operation of obtaining the length of the thumb when the user enables the "floating screen" function for the first time. Therefore, when components such as the electronic device, the camera, and a fingerprint sensor are enabled, the user is prompted to enter the length of the thumb, so that the user does not need to perform the operation of obtaining the length of the thumb when subsequently enabling the "floating screen" function.

Similarly, the following occasion for obtaining the length of the thumb and the holding position may also be an occasion when the "floating screen" function is enabled for the first time or the "floating screen" function is set, or another occasion. This is not limited in embodiments of the present invention.

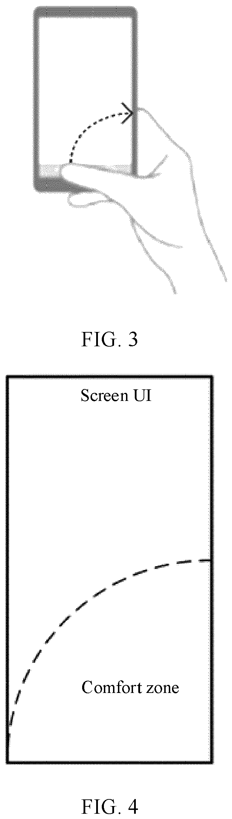

In another possible implementation, before the displaying a floating interface, the method further includes: prompting the user to draw an arc on the screen when the user holds the electronic device with one hand, and obtaining a track of the arc. Obtaining the length of the thumb of the user includes: calculating the length of the thumb based on the track of the arc. For example, refer to the description related to FIG. 3 in embodiments.

In this embodiment of this application, a manner of obtaining the length of the thumb is as follows: The user is prompted, on the screen UI, to perform fingerprint recognition. When the user places the finger on a fingerprint sensor, the fingerprint sensor collects a fingerprint of the user, and then determines the length of the thumb of the user based on a size of the fingerprint and a relationship between the size of the fingerprint and the length of the thumb.

In addition, when the user enables the "floating screen" function, a fingerprint obtained when the electronic device previously registers with a fingerprint for screen locking may alternatively be used. In this way, the user is prevented from performing a fingerprint obtaining operation, so that user experience is improved.

In another possible implementation, before the displaying a floating interface, the method further includes: prompting the user to draw an arc on the screen when the user holds the electronic device with one hand, and obtaining a track of the arc. Obtaining the length of the thumb of the user includes: calculating, based on the track of the arc, the position at which the user holds the electronic device.

In this embodiment of this application, a manner of obtaining the length of the thumb is as follows: The user is prompted, on the screen UI, to draw an arc. After the user draws the arc, a processor calculates a radius of the arc based on a curvature of the arc, to determine the length of the thumb of the user.

Certainly, manners of obtaining the length of the thumb in this application are not limited to the foregoing three manners. The length of the thumb of the user may alternatively be determined in a manner such as performing a specific operation used to determine the length of the thumb, or directly inputting data of the length of the thumb.

In another possible implementation, before the displaying a floating interface, the method further includes: prompting the user to draw an arc on the screen when the user holds the electronic device with one hand, and obtaining a track of the arc. Obtaining the position at which the user holds the electronic device includes: calculating, based on the track of the arc, the position at which the user holds the electronic device.

In this embodiment of this application, a manner of obtaining the position at which the user holds the electronic device is as follows: When the electronic device obtains the length of the thumb, after the user draws the arc on the screen UI, the processor not only calculates the radius of the arc based on the curvature of the arc, to determine the length of the thumb of the user, but also may determine, based on a circle center obtained through calculation, the position at which the user holds the electronic device. In this way, when the electronic device obtains the length of the thumb of the user and the position at which the user holds the electronic device, the user is prevented from performing a specific operation for a plurality of times, so that user experience is improved.

In another possible implementation, before the displaying a floating interface, the method further includes: obtaining at least one operation point at which the user performs an operation on the screen in a period of time. Obtaining the position at which the user holds the electronic device includes: calculating, based on the at least one operation point, the position at which the user holds the electronic device.

In another possible implementation, the calculating, based on the operation point, the position at which the user holds the electronic device includes: determining, based on a position of the at least one operation point on the screen, a circle center of one of N circles that covers a maximum quantity of the at least one operation point as a position of a holding point. The N circles are circles on the screen that use N screen edge positions on the screen as circle centers and use the length of the thumb as a radius. N is an integer greater than 2. The holding point is a position at which a palm or the thumb contacts with an edge of the screen when the user holds a mobile phone.

In this embodiment of this application, a manner of obtaining the position at which the user holds the electronic device is as follows: After a "floating screen" is enabled, the processor collects statistics on a quantity of taps and distribution of each tap position on a screen 194 in a period of time before the "floating screen" function is enabled, detects a quantity of operation points covered by circles that use positions on the edge of the screen as circle centers and use the length of the thumb as a radius, determines a circle that covers a maximum quantity of taps, and uses a position of a circle center of the circle as a holding point at which the user holds the electronic device, to determine the position at which the user holds the electronic device. Because this manner of obtaining the position at which the user holds the electronic device is performed by the processor, the user does not need to perform a specified operation. This improves user experience.

Certainly, manners of obtaining the position at which the user holds the electronic device in this application are not limited to the foregoing two manners. The position at which the user holds the electronic device may alternatively be determined in a manner such as detecting a temperature of the hand by a temperature sensor 180J, detecting holding pressure by a pressure sensor, or directly inputting the position at which the palm or the thumb contacts with the edge of the screen when the mobile phone is held.

In another possible implementation, determining the first region includes: determining, based on the position at which the user holds the electronic device, a holding point at which the palm or the thumb contacts with the edge of the screen when the user holds the mobile phone; and using, as the first region, a region formed on the screen by using the holding point as a circle center and the length of the thumb as a radius.

In another possible implementation, determining the first region includes: determining, based on at least two positions at which the user holds the electronic device, at least two holding points at which the palm or the thumb contacts with the edge of the screen when the user holds the mobile phone; and using, as the first region, an overlapping region between at least two regions formed on the screen by using the at least two holding points as circle centers and the length of the thumb as a radius.

In this embodiment of this application, it is considered that the two hands of the user use the electronic device in turn. In this case, the processor obtains a position at which the left hand of the user holds the mobile phone and a position at which the right hand of the user holds the mobile phone, and then forms, on the screen with reference to the length of the thumb of the user, a comfort zone generated by a left-hand holding point and a comfort zone generated by a right-hand holding point. The processor uses an overlapping region of the two comfort zones as a region for displaying the floating screen. In this way, the displayed floating screen may enable the user to perform an operation by using the left hand, or may enable the user to perform an operation by using the right hand.

In another possible implementation, the floating interface is displayed in the first region in a shape of a maximum size, and the shape of the floating interface is the same as a shape of the first interface. In this case, at least one corner of the presented floating interface is located on an edge of the comfort zone. The floating interface is presented in the comfort zone in the shape of the maximum size, so that it is convenient for the user to view content of the floating interface and operate an application on the floating interface.

In another possible implementation, the method further includes: detecting that the position at which the user holds the electronic device changes, determining a second region based on an updated position at which the user holds the electronic device and the length of the thumb, and displaying the second region on the first interface. The second region is an operable region on the screen when the position at which the user holds the electronic device changes, namely, a new comfort zone.

In another possible implementation, the method further includes: detecting that the user performs a tap operation in the second region, and displaying the floating interface in the second region in response to the tap operation.

In this embodiment of this application, after the new comfort zone is determined, an operation of the user on the floating interface is detected. When the user performs a specific gesture such as double-tapping, touching and holding, or drawing a small circle in the new comfort zone, the floating interface is moved to the new comfort zone.

In another possible implementation, the method further includes: detecting that the user performs a tap operation in the second region, and when the floating interface does not overlap the second region, displaying the floating interface in the second region in response to the tap operation.

In another possible implementation, the method further includes: detecting a drag operation of moving the floating interface from the first region to the second region by the user, and displaying the floating interface at an end position of the drag operation in response to the drag operation.

In this embodiment of this application, after the new comfort zone is determined, an operation of the user on the floating interface is detected. After the user performs the drag operation, the floating interface is dragged to the end position of the drag operation in the new comfort zone, and a moved distance and track of the floating screen on the screen are a dragged distance and track of the user on the screen.

In another possible implementation, the method further includes: detecting a drag operation of moving the floating interface from the first region to the second region by the user, and when the floating interface overlaps the second region, displaying the floating interface at an end position of the drag operation in response to the drag operation.

In another possible implementation, the method further includes: detecting an operation performed on a first position, where the floating interface includes a first control, the first interface includes a second control, a position at which the first control is displayed on the screen is the first position, a position at which the second control is displayed on the screen is a second position, and the first position and the second position at least partially overlap; prompting whether to disable display of the floating interface; and skipping displaying the floating interface if a display disabling instruction is received, and responding, by an application corresponding to the first interface, to the operation performed on the first position, and displaying a corresponding interface based on the second control. The first control is a touch component on the screen of the electronic device, and the second control is a part of the touch component. The first position is a position displayed on a display in the screen of the electronic device, and the second position is a part of the position displayed by the display.

In this embodiment of this application, when the user performs an operation on the screen UI, a tapping position is an overlapping region between the screen UI and the floating interface. To avoid an operation conflict, the user may disable the "floating screen" function before the operation. Alternatively, after the user performs a tap, the electronic device may prompt the user whether to disable the floating interface, and disable the "floating screen" function after receiving a disabling instruction from the user.

In another possible implementation, the method further includes: if the display disabling instruction is not received, determining whether at least one of a pressure value or duration of an operation that triggers the first control is greater than a specific value; if at least one of the pressure value or the duration of the operation that triggers the first control is greater than the specific value, responding, by the application corresponding to the first interface, to the operation performed on the first position, and displaying the corresponding interface based on the second control; or if at least one of the pressure value or the duration of the operation that triggers the first control is not greater than the specific value, responding, by the application corresponding to the floating interface, to the operation performed on the first position, and displaying a corresponding interface in a region occupied by the floating interface based on the first control.

In this embodiment of this application, if the user does not disable the "floating screen" function, the electronic device determines, based on a factor such as pressing time or force on the screen when the user performs the operation, whether the tap performed by the user is an operation on the screen UI or an operation on the floating screen, so as to determine a response event corresponding to the tap.

In another possible implementation, the method further includes: when it is detected that there are at least two operation points performed on the floating interface at a same time, and positions of the at least two operation points become farther as time changes, scaling up the size of the floating interface; or when it is detected that there are at least two operation points performed on the floating interface at a same time, and positions of the at least two operation points become closer as time changes, scaling down the size of the floating interface.

In this embodiment of this application, the size of the floating interface may be scaled up or scaled down based on a scaling-up operation or a scaling-down operation performed by the user on the floating interface, so that floating interfaces of different sizes are displayed based on requirements of the user.

According to a second aspect, this application provides a one-hand operation apparatus. The apparatus performs the method according to any one of the implementations of the first aspect.

According to a third aspect, this application provides an electronic device. The electronic device includes: a screen, configured to: display a first interface, where the first interface occupies the entire screen of the electronic device; and display a floating interface based on a first trigger operation; one or more processors; one or more memories; one or more sensors; and one or more computer programs. The one or more computer programs are stored in the one or more memories. The one or more computer programs include instructions, and when the instructions are executed by the electronic device, the electronic device is enabled to perform the method according to any one of the implementations of the first aspect.

According to a fourth aspect, this application provides a computer-readable storage medium. The computer-readable storage medium stores instructions, and when the instructions are run on an electronic device, the electronic device is enabled to perform the method according to any one of the implementations of the first aspect.

According to a fifth aspect, this application provides a computer program product including instructions. When the computer program product runs on an electronic device, the electronic device is enabled to perform the method according to any one of the implementations of the first aspect.

It may be understood that the electronic device in the third aspect, the computer storage medium in the fourth aspect, and the computer program product in the fifth aspect that are provided above are all configured to perform the corresponding methods provided above. Therefore, for beneficial effects that can be achieved by the electronic device, the computer storage medium, and the computer program product, refer to beneficial effects in the corresponding methods provided above. Details are not described herein again.

## BRIEF DESCRIPTION OF DRAWINGS

FIG. 1 is a schematic diagram of a structure of an electronic device according to an embodiment of this application;
FIG. 2 is a schematic diagram of positions of a touch point and a holding point in a palm;
FIG. 3 is a schematic diagram in which a user performs an operation on a screen with one hand;
FIG. 4 is a schematic diagram of a position of a comfort zone on a screen;
FIG. 5 is a schematic diagram of a position at which a floating screen is displayed in a comfort zone;
FIG. 6 is a block diagram of a software structure of a mobile phone according to an embodiment of this application;
FIG. 7 is a schematic diagram of obtaining palm information of a user by a camera;
FIG. 8 is a schematic diagram of determining a position of a holding point when a user holds a mobile phone according to an embodiment of this application;

FIG. 9 is a schematic diagram of determining a position of a holding point when a user holds a mobile phone according to an embodiment of this application;

FIG. 10 is a schematic diagram of a shape of a comfort zone generated by a different holding point according to an embodiment of this application;

FIG. 11(a) is a schematic diagram of a position of a floating screen in a comfort zone when a mobile phone is held in a landscape mode according to an embodiment of this application;

FIG. 11(b) is a schematic diagram of a relationship between a screen UI and content displayed on a floating screen when a mobile phone is held in a landscape mode according to an embodiment of this application;

FIG. 12 is a schematic diagram of a position of a floating screen in a comfort zone when a holding point is in a middle position of an edge of a screen according to an embodiment of this application;

FIG. 13 is a schematic diagram of determining a position of a comfort zone according to an embodiment of this application;

FIG. 14 is a schematic diagram of a position of a floating screen in a comfort zone according to an embodiment of this application;

FIG. 15 is a flowchart of a floating screen gesture-following method according to an embodiment of this application;

FIG. 16 is a schematic diagram of a scenario of moving a floating screen according to an embodiment of this application;

FIG. 17 is a schematic diagram of a scenario of moving a floating screen according to an embodiment of this application;

FIG. 18 is a flowchart of a method for resolving a conflict between a floating screen and a screen UI according to an embodiment of this application;

FIG. 19 is a schematic diagram of a screen UI and a floating screen that include status indication identifiers according to an embodiment of this application;

FIG. 20 is a schematic diagram of an operation of scaling up a floating screen according to an embodiment of this application;

FIG. 21 is a schematic diagram of an operation of scaling down a floating screen according to an embodiment of this application; and

FIG. 22 is a schematic diagram of a structure of an electronic device according to an embodiment of this application.

## DESCRIPTION OF EMBODIMENTS

The following describes implementations of embodiments in detail with reference to accompanying drawings.

A one-hand operation method provided in embodiments of this application may be applied to an electronic device having a screen 194, for example, a mobile phone, a tablet computer, a notebook computer, an ultra-mobile personal computer (ultra-mobile personal computer, UMPC), a handheld computer, a netbook, a personal digital assistant (personal digital assistant, PDA), a wearable device, or a virtual reality device. This is not limited in embodiments of this application.

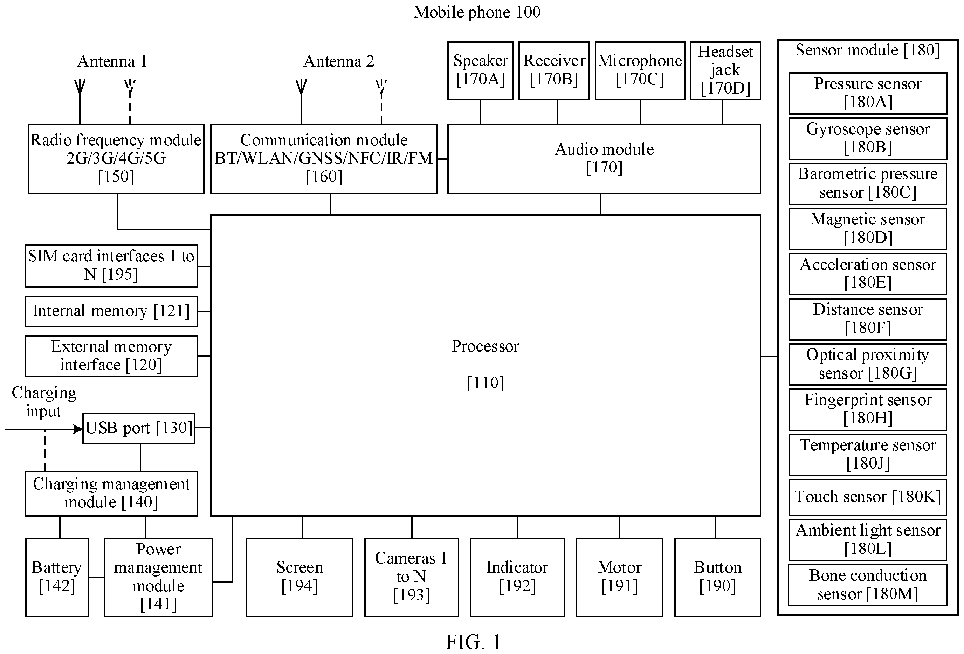

For example, the electronic device is a mobile phone 100. FIG. 1 is a schematic diagram of a structure of the mobile phone.

The mobile phone 100 may include a processor 110, an external memory interface 120, an internal memory 121, a universal serial bus (universal serial bus, USB) port 130, a charging management module 140, a power management module 141, a battery 142, an antenna 1, an antenna 2, a radio frequency module 150, a communication module 160, an audio module 170, a speaker 170A, a receiver 170B, a microphone 170C, a headset jack 170D, a sensor module 180, a button 190, a motor 191, an indicator 192, a camera 193, the screen 194, a subscriber identification module (subscriber identification module, SIM) card interface 195, and the like.

It may be understood that the structure illustrated in this embodiment of this application does not constitute a specific limitation on the mobile phone 100. In some other embodiments of this application, the electronic device 100 may include more or fewer components than those shown in the figure, or some components may be combined, or some components may be split, or different component arrangements may be used. The components shown in the figure may be implemented in hardware, software, or a combination of software and hardware.

The processor 110 may include one or more processing units. For example, the processor 110 may include an application processor (application processor, AP), a modem processor 110, a graphics processing unit (graphics processing unit, GPU) 110, an image signal processor (image signal processor, ISP) 110, a controller, a memory, a video codec, a digital signal processor (digital signal processor, DSP) 110, a baseband processor 110, a neural-network processing unit (neural-network processing unit, NPU) 110, and/or the like. Different processing units may be independent components, or may be integrated into one or more processors 110.

The controller may be a nerve center and a command center of the mobile phone 100. The controller may generate an operation control signal based on an instruction operation code and a time sequence signal, to control instruction reading and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor 110 may directly invoke the instructions or the data from the memory. This avoids repeated access and reduces waiting time of the processor 110, thereby improving system efficiency.

In some embodiments, the processor 110 may include one or more interfaces. The interfaces may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor 110 interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The I2C interface is a two-way synchronization serial bus, and includes one serial data line (serial data line, SDA) and one serial clock line (serial clock line, SCL).

The I2S interface may be configured to perform audio communication. In some embodiments, the processor 110 may include a plurality of groups of I2S buses. The processor 110 may be coupled to the audio module 170 through a I2S bus, to implement communication between the processor 110 and the audio module 170. The PCM interface may also be configured to: perform audio communication, and sample, quantize, and code an analog signal.

The UART interface is a universal serial data bus, and is configured to perform asynchronous communication. The bus may be a two-way communication bus. The bus converts to-be-transmitted data between serial communication and parallel communication.

The MIPI interface may be configured to connect the processor 110 and a peripheral component such as the screen 194 or the camera 193. The MIPI interface includes a camera 193 serial interface (camera serial interface, CSI), a display serial interface (display serial interface, DSI), and the like. The GPIO interface may be configured by software. The GPIO interface may be configured as a control signal or a data signal. In some embodiments, the GPIO interface may be configured to connect the processor 110 to the camera 193, the screen 194, the communication module 160, the audio module 170, the sensor module 180, or the like. The GPIO interface may alternatively be configured as the I2C interface, the I2S interface, the UART interface, the MIPI interface, or the like.

The USB port 130 is a port that conforms to a USB standard specification, and may be specifically a mini USB port, a micro USB port, a USB Type-C port, or the like.

It may be understood that an interface connection relationship between the modules shown in this embodiment of this application is merely an example for description, and does not constitute a limitation on the structure of the mobile phone 100. In some other embodiments of this application, the mobile phone 100 may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input of the wired charger through the USB port 130.

The power management module 141 is configured to connect to the battery 142, the charging management module 140, and the processor 110. The power management module 141 receives an input of the battery 142 and/or the charging management module 140, and supplies power to the processor 110, the internal memory 121, an external memory, the screen 194, the camera 193, the communication module 160, and the like. The power management module 141 may be further configured to monitor parameters such as a battery capacity, a battery cycle count, and a battery health status (electric leakage or impedance). A wireless communication function of the mobile phone 100 may be implemented by using the antenna 1, the antenna 2, the radio frequency module 150, the communication module 160, the modem processor 110, the baseband processor 110, and the like.

The antenna 1 and the antenna 2 are configured to transmit and receive electromagnetic wave signals. Each antenna in the mobile phone 100 may be configured to cover one or more communication frequency bands. Different antennas may be further multiplexed, to improve antenna utilization. For example, the antenna 1 may be multiplexed as a diversity antenna of a wireless local area network. The radio frequency module 150 may provide a wireless communication solution that is applied to the mobile phone 100 and that includes 2G/3G/4G/5G. The radio frequency module 150 may include at least one filter, a switch, a power amplifier, a low noise amplifier (low noise amplifier, LNA), and the like. The radio frequency module 150 may receive an electromagnetic wave through the antenna 1, perform processing such as filtering or amplification on the received electromagnetic wave, and transfer the electromagnetic wave to the modem processor 110 for demodulation. The radio frequency module 150 may further amplify a signal modulated by the modem processor 110, and convert the signal into an electromagnetic wave for radiation through the antenna 1.

The modem processor 110 may include a modulator and a demodulator. The modulator is configured to modulate a to-be-sent low-frequency baseband signal into a medium- or high-frequency signal. The demodulator is configured to demodulate a received electromagnetic wave signal into a low-frequency baseband signal. Then, the demodulator transmits the low-frequency baseband signal obtained through demodulation to the baseband processor 110 for processing. The low-frequency baseband signal is processed by the baseband processor 110 and then transmitted to the application processor. The application processor outputs a sound signal through an audio device (which is not limited to the speaker 170A, the receiver 170B, or the like), or displays an image or a video through the screen 194. The communication module 160 may provide a wireless communication solution that is applied to the mobile phone 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The communication module 160 may be one or more components integrating at least one communication processor module. The communication module 160 receives an electromagnetic wave through the antenna 2, performs frequency modulation and filtering processing on an electromagnetic wave signal, and sends a processed signal to the processor 110. The communication module 160 may further receive a to-be-sent signal from the processor 110, perform frequency modulation and amplification on the signal, and convert the signal into an electromagnetic wave for radiation through the antenna 2.

In some embodiments, the antenna 1 and the radio frequency module 150 of the mobile phone 100 are coupled, and the antenna 2 and the communication module 160 of the mobile phone 100 are coupled, so that the mobile phone 100 can communicate with a network and another device by using a wireless communication technology. The wireless communication technology may include a global system for mobile communication (global system for mobile communication, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), 5G, BT, the GNSS, the WLAN, the NFC, the FM, the IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The mobile phone 100 may implement a photographing function by using the ISP, the camera 193, the video codec, the GPU, the screen 194, the application processor, and the like.

The ISP is configured to process data fed back by the camera 193. For example, during photographing, a shutter is pressed, and light is transmitted to a photosensitive element of the camera 193 through a lens. An optical signal is converted into an electrical signal, and the photosensitive element of the camera 193 transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the mobile phone 100 may include one or N cameras 193, where N is a positive integer greater than 1.

The digital signal processor 110 is configured to process a digital signal. In addition to a digital image signal, the digital signal processor may further process another digital signal. For example, when the mobile phone 100 selects a frequency, the digital signal processor 110 is configured to perform Fourier transform on frequency energy, and the like.

The video codec is configured to compress or decompress a digital video. The mobile phone 100 may support one or more video codecs. In this way, the mobile phone 100 can play or record videos in a plurality of encoding formats, for example, moving picture experts group (moving picture experts group, MPEG)-1, MPEG-2, MPEG-3, and MPEG-4.

In this embodiment of this application, hand information of a user may be collected by using the camera. For example, when the user enables a "floating screen" function for the first time, the mobile phone 100 prompts the user to enter the hand information. After the user enters an instruction of "turning on the camera 193", the processor 110 turns on the camera 193 to perform photographing, to obtain the hand information of the user. The hand information may include information such as a palm size, a length of each finger, and a fingerprint of each finger. In this embodiment of this application, the hand information of the user is obtained mainly to obtain a length of a thumb of the user.

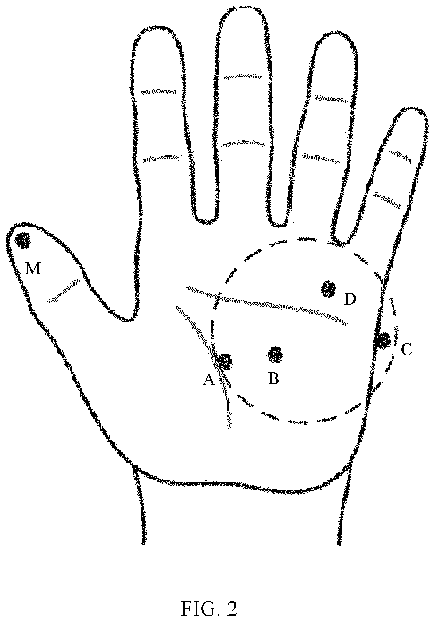

The length of the thumb is a distance between a position (which is subsequently referred to as a touch point) at which the thumb of the user contacts with the screen 194 when the thumb of the user performs an operation and a position (which is subsequently referred to as a holding point) at which a palm of the user contacts with an edge of the screen 194 when the user holds the mobile phone 100 with one hand as shown in FIG. 3. As shown in FIG. 2, the touch point is generally located in a fingerprint region of the thumb, as shown by a point M in FIG. 2; and the holding point is generally a point in the palm or in a region to the right of the palm, as shown by points A, B, C, and D in a dashed-line region in FIG. 2. In this way, the length of the thumb is a distance from the M point to the point A, the point B, the point C, or the point D.

For a male user, a palm is relatively large. When the male user holds the mobile phone 100, most holding points are at positions of points A and B in FIG. 2. For a female user, a palm is relatively small. When the female user holds the mobile phone 100, most holding points are at positions of points C and D in FIG. 2. Therefore, when calculating the length of the thumb, the processor 110 selects a holding point based on a size of a palm in an obtained image. To be specific, a larger palm indicates that a selected holding point is closer to the left side in the dashed-line region, and a smaller palm indicates that a selected holding point is closer to the right side in the dashed-line region.

In an embodiment, the processor 110 controls one camera 193 of at least two cameras 193 to obtain a red green blue (red green blue, RGB) image that includes the hand of the user, controls another camera 193 of the at least two cameras 193 to obtain image depth information that includes the hand of the user, and then calculates a red green blue-depth map (red green blue-depth map, RGB-D) based on the RGB image and the image depth information obtained by the at least two cameras 193.

In an example, the processor 110 recognizes the touch point M and the holding point A (the holding point A is used as an example) based on the RGB-D image, and then calculates positions M1 (Xp, Yp) and A1 (Xf, Yf) of the touch point M and the holding point A in the RGB image with reference to resolution H (Height) x W (Width) of the RGB image. Then, positions M2 (Xp, Yp, Zp) and A2 (Xf, Yf, Zf) of the touch point M and the holding point A in the RGB-D image are calculated based on the image depth information.

The processor 110 converts coordinates in RGB-D coordinates into coordinates in a Cartesian coordinate system in space, and a calculation process is specifically as follows:

$$X_{SP} = Z_P \cdot \frac{X_P - C_X}{F_X}$$

$$Y_{SP} = Z_P \cdot \frac{Y_P - C_y}{F_y}$$

$$Z_{SP} = Z_P \quad ; \quad\quad\quad (1)$$

$$X_{Sf} = Z_f \cdot \frac{X_f - C_X}{F_X}$$

$$Y_{Sf} = Z_f \cdot \frac{Y_f - C_y}{F_y}$$

$$Z_{Sf} = Z_f \quad ; \quad\quad\quad (2)$$

Cx, Cy, Fx, and Fy are intrinsic parameter data of the camera for obtaining an RGD image. Cx and Cy are vertical and horizontal offsets (unit: pixel) of an origin point of the image relative to an imaging point at an aperture center. Fx = f/dx, where f is a focal length of the camera, dx indicates a quantity of length units are occupied by one pixel in an x direction. Fy = f/dy, where f is the focal length of the camera, dy indicates a quantity of length units are occupied by one pixel in a y direction.

After a touch point M3 (Xsp, Ysp, Zsp) and a holding point A3 (Xsf, Ysf, Zsf) in the Cartesian coordinate system in which the camera obtaining the RGD image is used as the origin point in space are calculated based on the foregoing formula (1) and formula (2), the length d of the thumb is calculated as follows:

$$d = \sqrt{\left(X_{Sp} - X_{Sf}\right)^2 + \left(Y_{Sp} - Y_{Sf}\right)^2 + \left(Z_{Sp} - Z_{Sf}\right)^2} \quad ; \quad\quad\quad (3)$$

In the resolution, H (Height) represents a unit of a quantity of points occupied in the image in a first direction, and W (Width) represents a unit of a quantity of points occupied in the image in a second direction. The first direction is generally parallel to a short side of the mobile phone screen, and the second direction is parallel to a long side of the mobile phone screen.

In an embodiment, the processor 110 controls two cameras 193 of the at least two cameras 193 to obtain two RGB images including the hand of the user, and then calculates an RGB-D image based on a binocular camera 193 principle. After obtaining the RGB-D image including the hand of the user, the processor 110 calculates the length of the thumb based on the resolution H (Height) x W (Width) of the RGB image and the image depth information.

In this embodiment of this application, the hand information of the user is obtained to obtain the length of the thumb, so as to determine a display size of a floating screen when the "floating screen" function is subsequently enabled. In this way, it is ensured that the user can perform an operation at each position of the floating screen when holding the mobile phone.

The mobile phone 100 implements a positioning function and a display function by using the GPU, the screen 194, the application processor, and the like.

The GPU is a microprocessor for image processing, and connects the screen 194 to the application processor. The GPU is configured to: perform mathematical and geometric computation, and render an image. The processor 110 may include one or more GPUs that execute program instructions to generate or change display information. In this embodiment of this application, the screen 194 may include a display and a touch panel. The display is configured to output display content to the user, and the touch panel is configured to receive a touch event entered by the user on the screen 194. After receiving the touch event sent by the screen 194, the processor 110 may further determine a tapping position at which the user performs an operation. The touch panel may be a touch sensor 1810K.

After the mobile phone 100 obtains the length of the thumb of the user, the processor 110 obtains a tapping position at which the user performs an operation on the screen 194, and then determines, with reference to the length of the thumb, a position of a holding point when the user holds the mobile phone.

For example, as shown in FIG. 3, after the user enables the "floating screen" function, a prompt for indicating the user to draw an arc on the screen 194 is displayed on the screen 194. After the palm or a thumb joint of the user contacts with the edge of the screen 194, and the user draws an arc (as shown by a dashed line in FIG. 3) on the screen 194 based on the indication, the touch panel sends a received tapping position at which an operation is performed to the processor 110. After receiving the tapping position, the processor 110 calculates, based on a curvature of the arc, a position of a circle center of the arc on an edge around the screen 194, and uses the position of the circle center as the position of the holding point when the user holds the mobile phone. In an embodiment, when the user holds the mobile phone, if the palm or the thumb joint of the user does not contact with the edge of the screen 194, the palm or the thumb joint of the user is outside the edge of the mobile phone, or is on the screen 194. After the user draws an arc on the screen 194 based on the indication, the touch panel sends a received tapping position at which an operation is performed to the processor 110. After receiving the tapping position, the processor 110 calculates a position of a circle center of the arc based on a curvature of the arc. In this case, the circle center is inside the screen or outside the screen 194. In this case, the processor increases or decreases the curvature of the arc based on the arc drawn by the user, so that the calculated circle center is on the edge around the screen 194.

In an embodiment, after obtaining the position of the holding point when the user holds the mobile phone, the processor 110 determines, based on the position of the holding point (namely, the position of the circle center of the arc) and the length of the thumb, by using the position of the holding point as the circle center and using the length of the thumb as a radius, a region (which is referred to as a comfort zone below) that can be operated by the thumb of the user on the screen 194, for example, a dashed-line region shown in FIG. 4, to ensure that an obtained comfort zone is a region that can be operated by the user to a maximum extent.

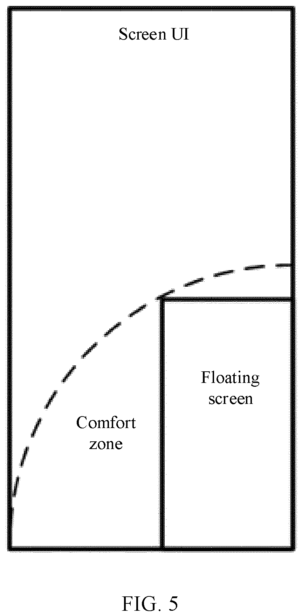

Then, the processor 110 presents a floating screen in the comfort zone on the screen 194, as shown in FIG. 5. In this embodiment of this application, the floating screen is a scaled-down version of a UI of the screen 194. For example, the floating screen may be a proportionally scaled down version. For example, an aspect ratio of the UI is the same as that of the UI of the screen 194. A person skilled in the art may also understand that the floating screen may alternatively be a disproportionally scaled down version. A long side of the UI is a longer side of the screen, and a wide side of the UI is a shorter side of the screen.

In this embodiment of this application, because a presented position of the floating screen is within a maximum operable range of the user, the user may perform an operation at any position on the floating screen. In this way, it is more convenient for the user to operate a large screen device with one hand.

The NPU is a neural network (neural network, NN) computing processor 110, quickly processes input information by referring to a structure of a biological neural network, for example, by referring to a mode of transmission between human brain neurons, and may further continuously perform self-learning.

The external memory interface 120 may be configured to connect to an external storage card such as a micro SD card, to extend a storage capability of the mobile phone 100. The external memory card communicates with the processor 110 through the external memory interface 120, to implement a data storage function. For example, a file such as music or a video is stored in the external storage card.

The internal memory 121 may be configured to store computer-executable program code. The executable program code includes instructions. The processor 110 runs the instructions stored in the internal memory 121, to perform various function applications of the mobile phone 100 and data processing. The internal memory 121 may include a program storage region and a data storage region. The program storage region may store an operating system, an application required by at least one function (for example, a sound playing function or an image playing function), and the like. The data storage region may store data (for example, audio data and an address book) created during use of the mobile phone 100, and the like. In addition, the internal memory 121 may include a high-speed random access memory, or may include a nonvolatile memory, for example, at least one magnetic disk storage device, a flash memory, or a universal flash storage (universal flash storage, UFS).

The mobile phone 100 may implement an audio function such as music playing or recording through the audio module 170, the speaker 170A, the receiver 170B, the microphone 170C, the headset jack 170D, the application processor, and the like.

The audio module 170 is configured to convert digital audio information into an analog audio signal output, and is also configured to convert an analog audio input into a digital audio signal. The audio module 170 may be further configured to: code and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The mobile phone 100 may listen to music or answer a hands-free call through the speaker 170A.

The receiver 170B, also referred to as an "earpiece", is configured to convert an audio electrical signal into a sound signal. When a call is answered or voice information is received by using the mobile phone 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the mobile phone 100. The headset jack 170D is configured to connect to a wired headset. The headset jack 170D may be the USB port 130, or may be a 3.5 mm open mobile terminal platform (open mobile terminal platform, OMTP) standard interface or a cellular telecommunications industry association of the USA (cellular telecommunications industry association of the USA, CTIA) standard interface.

The button 190 includes a power button, a volume button, and the like. The button 190 may be a mechanical button, or may be a touch button. The mobile phone 100 may receive a button input, and generate a button signal input related to a user setting and function control of the mobile phone 100.

The motor 191 may generate a vibration prompt. The motor 191 may be configured to produce an incoming call vibration prompt and a touch vibration feedback. For example, touch operations performed on different applications (for example, photographing and audio playing) may correspond to different vibration feedback effects. For touch operations performed on different regions of the screen 194, the motor 191 may also correspond to different vibration feedback effects. The indicator 192 may be an indicator light that may be configured to indicate a charging state and a battery power change, and may be further configured to indicate a message, a missed call, a notification, and the like.

The SIM card interface 195 is configured to connect to a SIM card. The SIM card may be inserted into the SIM card interface 195 or detached from the SIM card interface 195, to implement contact with or separation from the mobile phone 100. The mobile phone 100 may support one or N SIM card interfaces, where N is a positive integer greater than 1. The SIM card interface 195 may support a nano SIM card, a micro SIM card, a SIM card, and the like. A plurality of cards may be simultaneously inserted into a same SIM card interface 195. The plurality of cards may be of a same type or of different types. The SIM card interface 195 is compatible with different types of SIM cards. The SIM card interface 195 is also compatible to an external storage card. The mobile phone 100 interacts with a network by using the SIM card, to implement functions such as calling and data communication. In some embodiments, the mobile phone 100 uses an eSIM, namely, an embedded SIM card. The eSIM card may be embedded in the mobile phone 100, and cannot be separated from the mobile phone 100.

A software system of the mobile phone 100 may use a layered architecture, an event-driven architecture, a microkernel architecture, a microservice architecture, or a cloud architecture. In this embodiment of this application, an Android system with a layered architecture is used as an example to describe a software structure of the mobile phone 100.

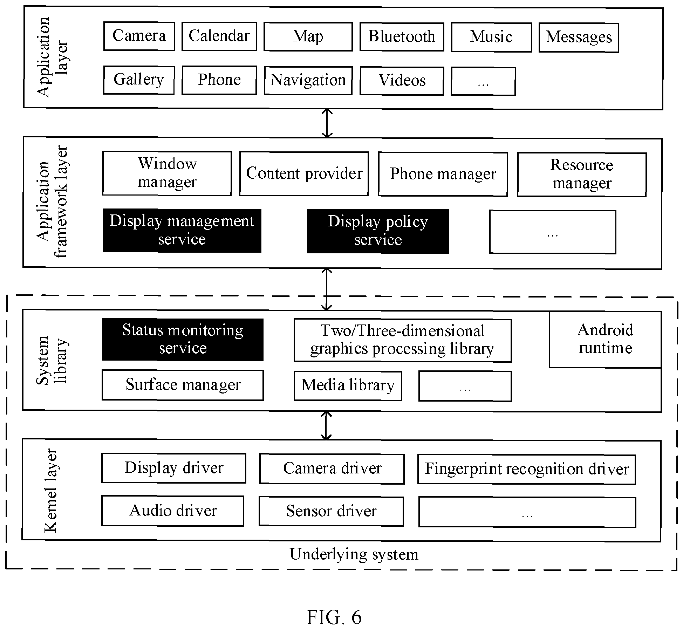

FIG. 6 is a block diagram of the software structure of the mobile phone 100 according to an embodiment of this application.

In the layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages. As shown in FIG. 6, applications such as Camera, Gallery, Calendar, Phone, Map, Navigation, Bluetooth, Music, Videos, and Messages may be installed at the application layer.

The application framework layer provides an application programming interface (application programming interface, API) and a programming framework for an application at the application layer. The application framework layer includes some predefined functions. As shown in FIG. 6, the application framework layer may include a display policy service and a display management service. Certainly, the application framework layer may further include an activity manager, a window manager, a content provider, a view system, a phone manager, a resource manager, a notification manager, and the like. This is not limited in this embodiment of this application.

The display policy service may obtain data reported by an underlying system, for example, data such as image data obtained by the camera and a touch point obtained by the touch panel.

Specifically, when the user enables the "floating screen" function, the mobile phone 100 may receive a trigger operation of obtaining the hand information by the user. For example, the trigger operation may be an operation of enabling the camera 193, an operation of tapping the screen 194, a fingerprint unlock operation, or a data input operation that is performed by the user. After receiving the operation, the underlying system of the mobile phone 100 sends data such as the touch point to the display policy service.

Still as shown in FIG. 6, the system library, the kernel layer, and the like below the application framework layer may be referred to as an underlying system. The underlying system includes an underlying display system configured to provide a display service. For example, the underlying display system includes a display driver at the kernel layer, a surface manager in the system library, and the like. In addition, the underlying system in this application further includes a status monitoring service configured to obtain the length of the thumb of the user. The status monitoring service may be independently disposed in the underlying display system, or may be disposed in the system library and/or at the kernel layer.

For example, the status monitoring service may invoke a sensor service (sensor service) to enable a sensor such as the camera 193 or the touch panel for detection. The status monitoring service may send detection data reported by each sensor to the display policy service. The display policy service calculates the length of the thumb based on the obtained data.

Then, the display policy service may obtain other data reported by the underlying system, for example, data such as a plurality of touch points obtained by the touch panel and a temperature obtained by a temperature sensor.

Specifically, the touch panel may further detect a trigger operation of the user obtaining the position at which the user holds the mobile phone. For example, the trigger operation may be an operation of tapping the screen 194, an operation of sliding the screen 194, or an operation of turning on a sensor that is performed by the user. After receiving the operation, the underlying system sends data such as the touch point to the display policy service.

The status monitoring service may further invoke the sensor service (sensor service) to enable the sensor such as the touch panel of the screen 194 or the temperature sensor for detection. The status monitoring service may send detection data reported by each sensor to the display policy service. The display policy service calculates, based on the obtained data, the position of the holding point when the user holds the mobile phone.

The display policy service determines, based on the length of the thumb of the user and the position of the holding point when the user holds the mobile phone, the region (namely, the comfort zone) that can be operated by the user on the screen 194, and then indicates the display management service to display the floating screen in the comfort zone.

In this embodiment of this application, the underlying system obtains the length of the thumb of the user and the position of the holding point when the user holds the mobile phone, and then reports the length and the position to the display policy service. The display policy service calculates a position of the comfort zone on the screen 194 based on the length of the thumb and the position of the holding point when the user holds the mobile phone, and notifies the display management service to display the floating screen on the comfort zone.

The following describes an implementation process of the foregoing solution in this application by using several specific embodiments.

**Embodiment 1**

When the "floating screen" function is enabled on the mobile phone for the first time, the mobile phone prompts the user to enter the hand information. After the mobile phone records the hand information of the user, the processor 110 calculates the length of the thumb of the user based on the obtained hand information.

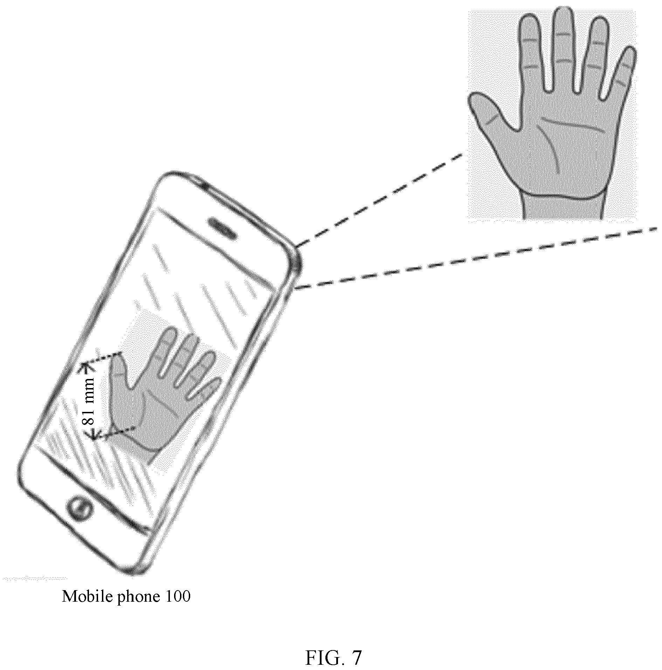

For example, as shown in FIG. 7, after receiving the instruction of "turning on the camera 193" entered by the user, the mobile phone 100 turns on the camera 193 for photographing. When the user places the palm in front of the camera 193 of the mobile phone 100, after the camera 193 obtains an image including the hand of the user, the processor 110 processes the image to obtain the length of the thumb of the user.

In this embodiment of this application, at least two cameras 193 collect the hand information and send the hand information to the processor 110. The processor 110 generates the RGB-D image based on the hand information collected by the cameras 193, and then calculates the length of the thumb based on the resolution H (Height) x W (Width) and the image depth information.

It should be specially noted that, in this embodiment of this application, a manner of obtaining the length of the thumb of the user is not limited to obtaining the length by using the camera 193, and the length may alternatively be obtained by using the fingerprint sensor 180H. Generally, a size of a fingerprint of a human is closely related to a size of a palm and a length of a thumb. A larger fingerprint indicates a larger palm and a longer thumb. A smaller fingerprint indicates a smaller palm and a shorter thumb. In a process in which the fingerprint sensor 180H performs fingerprint recognition, the mobile phone having the fingerprint sensor 180H obtains fingerprint information of the thumb of the user, and then sends the fingerprint information to the processor 110. After receiving the fingerprint information, the processor 110 may determine the length of the thumb of the user based on a size of a fingerprint.

In an example, the processor 110 may collect palm size information and fingerprint size information of a large quantity of users, and then perform statistics collection and processing, to determine a relationship between a length of a thumb and a fingerprint size. After obtaining the fingerprint information of the user from the fingerprint sensor 180H, the processor 110 determines the length of the thumb of the user based on the relationship between a length of a thumb and a fingerprint size.

In addition, the length of the thumb of the user may be further determined in a manner of performing, by the user on the screen 194, a specific operation (for example, the operation shown in FIG. 3) for determining the length of the thumb, directly inputting data of the length of the thumb, or the like. Herein, the manner of obtaining the length of the thumb is not limited in embodiments of this application.

In this application, the length of the thumb of the user is obtained, to determine the display size of the floating screen when the "floating screen" function is subsequently enabled, so as to ensure that the user can perform an operation on each position of the floating screen when holding the mobile phone.

After obtaining the length of the thumb of the user, the processor 110 further needs to determine, based on a position at which the user holds the mobile phone 100, a specific position at which the floating screen is displayed on the screen 194.

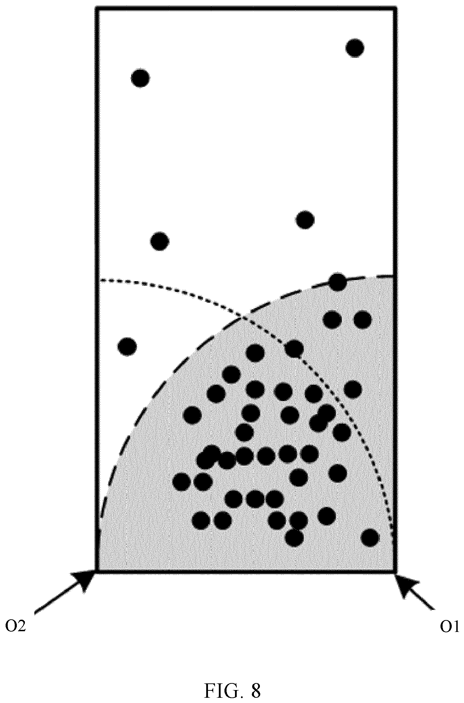

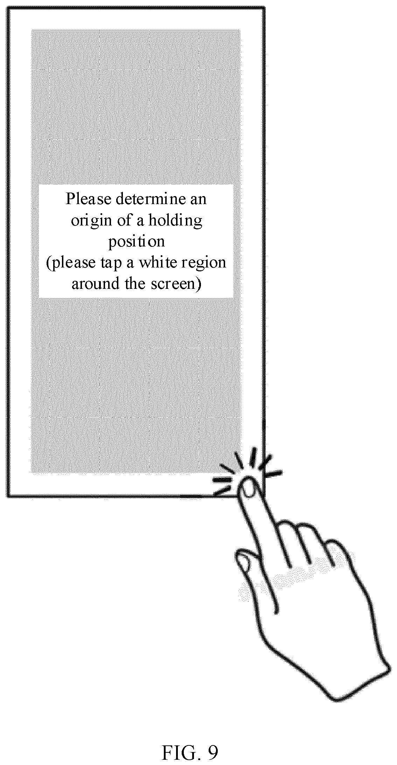

For example, as shown in FIG. 8, the processor 110 forms N circles based on the length of the thumb by using each position on the edge of the screen 194 as a circle center (for example, points O1 and O2 in FIG. 9; or using any position on the edge of the screen 194 as a circle center) and using the length of the thumb as a radius. The position on the edge of the screen 194 is a position at which the screen 194 contacts with a housing of the mobile phone 100.

In a process in which the user uses the mobile phone, the touch panel on the screen 194 sends, to the processor 110, a tapping position (a black dot in the figure) at which the user performs an operation on the display. The processor 110 may collect statistics on a quantity of taps in a specific period of time and distribution of each tapping position on the screen 194. Time for statistics may be set to five minutes, ten minutes, half an hour, one hour, or other time duration, and is specifically related to a tapping frequency at which an operation is performed on the screen 194 when the user uses the mobile phone before the "floating screen" function is enabled. Then, the processor 110 detects a quantity of taps covered by each circle, determines a circle that covers a maximum quantity of taps, and uses a position of a circle center of the circle as the holding point at which the user holds the mobile phone 100.

In addition, when the "floating screen" function is enabled, the processor 110 may further count a quantity N of taps before the function is enabled, and determine distribution of each tapping position on the screen 194. The quantity of the taps may be 10, 20, or another number, which is specifically related to a frequency at which the user uses the mobile phone.

As shown in FIG. 8, because a quantity of taps covered by a circle whose circle center is O1 is greater than a quantity of taps covered by a circle whose circle center is O2, the processor 110 uses the circle center O1 as the holding point at which the user holds the mobile phone 100.

For example, as shown in FIG. 9, when the user enables the "floating screen" function, an identifier prompting the user to tap a specific position on the screen 194 to determine the holding point is displayed on the screen 194, and the holding point at which the user holds the mobile phone 100 is determined by obtaining and tapping the specific position.

As shown in FIG. 9, a caption "Please determine an origin of a holding position (please tap a white region around the screen 194)" is displayed in a middle position of the screen 194, and a background of a position around the screen 194 is displayed in white or another eye-catching color. The central position of the screen 194 is gray or another color that is easily distinguished from the color around the screen 194, to prompt the user to tap the white or another eye-catching color region around the screen 194. When the user taps the white or another eye-catching color region around the screen 194 once or twice, the touch panel sends a tapping position to the processor 110, and the processor 110 uses the position as the holding point at which the user holds the mobile phone 100.

In addition, the processor 110 may further determine the holding point at which the user holds the mobile phone 100 in a manner such as detecting a temperature of the hand by the temperature sensor 180J, detecting a holding pressure by the pressure sensor, or performing a specific operation on the screen 194 as shown in FIG. 3. Herein, a method for determining the position of the holding point at which the user holds the mobile phone is not limited in embodiments of this application.

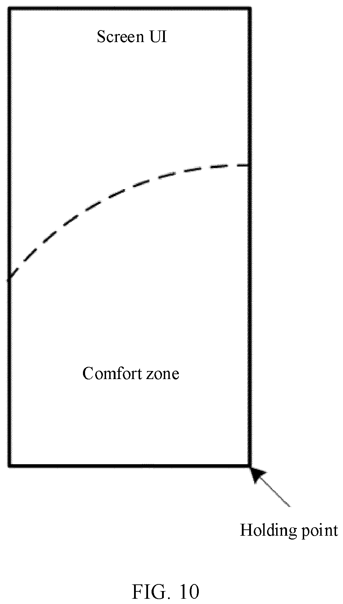

After obtaining the holding point at which the user holds the mobile phone 100, the processor 110 determines, on the screen 194 with reference to the length of the thumb, the comfort zone that can be operated by the thumb of the user. The comfort zone is a sector region that uses the holding point, at which the mobile phone 100 is held, at the edge of the screen 194 as a circle center and uses the length of the thumb as a radius. Alternatively, if the length of the thumb is greater than a length of the shorter side of the screen, an irregular shape of the sector region is formed on the screen, as shown in FIG. 10.

For example, as shown in FIG. 3, when the right hand of the user holds the mobile phone 100, and the holding point is at the bottom-right corner of the screen 194 of the mobile phone, a 1/4 circular region that uses the bottom-right corner of the screen 194 as a circle center and uses the length of the thumb as a radius, namely, the comfort zone, is formed on the screen 194, as shown in FIG. 4. When enabling the "floating screen" function, the processor 110 displays a floating screen in the comfort zone on the screen 194.

In some embodiments, an initial display size of the floating screen is in a largest shape in the comfort zone on the screen 194, as shown in FIG. 5. The bottom-right corner of the floating screen coincides with the bottom-right corner of the screen 194, and the top-left corner of the floating screen is located on an edge of the comfort zone. Certainly, the processor 110 may alternatively determine the initial display size of the floating screen this time based on a size of the floating screen historically used by the user.

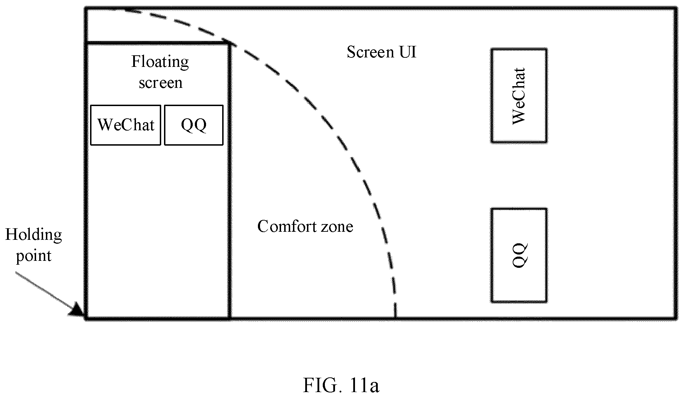

If the user holds the mobile phone in a landscape mode, as shown in FIG. 11(a), the aspect ratio of the floating screen presented on the screen 194 is still the same as that of the screen 194, but a longer side of the floating screen is parallel to the shorter side of the UI of the screen 194, and a shorter side of the floating screen is parallel to the longer side of the UI of the screen 194. Because the aspect ratio of the floating screen is the same as that of the UI of the screen 194, the bottom-left corner of the floating screen coincides with the bottom-right corner of the screen 194, and the top-right corner of the floating screen is located on an edge of the comfort zone. In this way, an area of the formed floating screen is the largest.

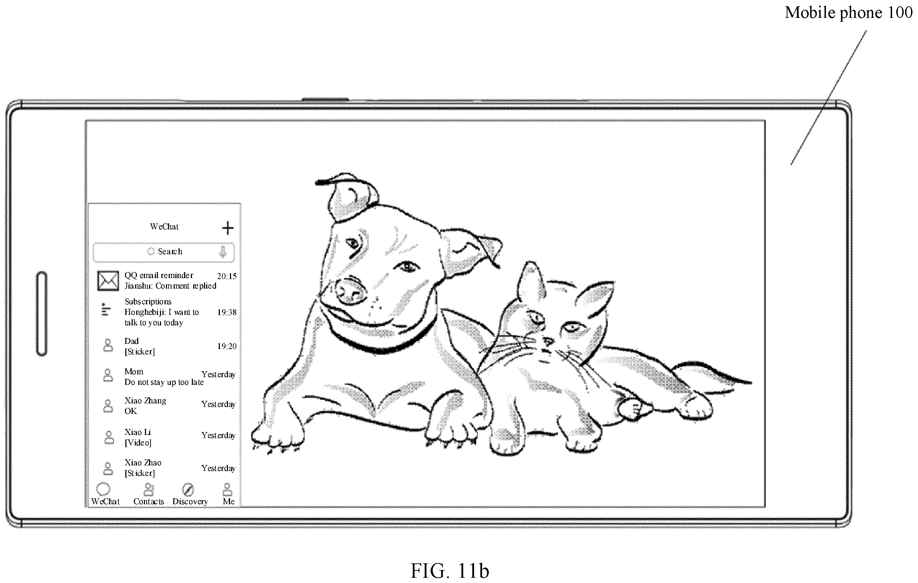

For example, as shown in FIG. 11(b), when the user holds the mobile phone in the landscape mode and watches a movie video in "iQIYI" on the UI of the screen 194, a "WeChat" message is received. If the user does not want to exit the video, the user may enable the "floating screen" function, and then enable the floating screen to display a WeChat chat interface. In this case, to help the user chat in WeChat on the floating screen, the WeChat interface displayed on the floating screen is perpendicular to the screen UI.

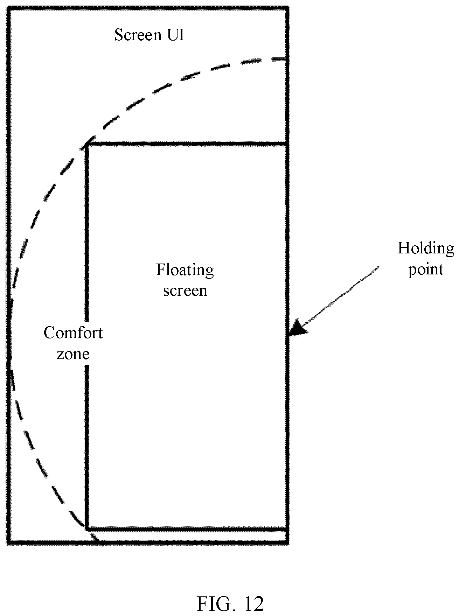

In some embodiments, the size of the floating screen is related to the length of the thumb, and is also related to the position of the holding point. As shown in FIG. 5, if the length of the thumb is longer, a larger comfort zone is formed, and a larger floating screen can be formed in the comfort zone. Alternatively, if the length of the thumb is shorter, a smaller comfort zone is formed, and a smaller floating screen can be formed in the comfort zone. As shown in FIG. 12, if a gesture with which the user holds the mobile phone changes, and the holding point changes from a position at the bottom-right corner of the screen 194 to a position in the middle of the right side of the screen 194, a comfort zone formed on the screen 194 this time is larger than a comfort zone formed in FIG. 12, and a floating screen that can be formed in the comfort zone is larger than a floating screen in FIG. 8. Therefore, the size of the floating screen formed on the UI of the screen 194 varies with the position at which the user holds the mobile phone.

In some embodiments, content displayed on the floating screen may be different from content displayed on the UI of the screen 194. For example, as shown in FIG. 11(b), regardless of whether the user performs an operation such as chatting or video chatting on the WeChat interface on the floating screen, or performs an operation such as "fast forward" or "backward" on a video on the UI of the screen 194, after receiving an operation instruction, the processor 110 displays feedback of the operation instruction on both the floating screen and the UI of the screen 194.

Certainly, the content displayed on the floating screen may alternatively be the same as the content displayed on the UI of the screen 194. In this case, regardless of whether the user performs an operation on the floating screen or on the UI of the screen 194, after receiving an operation instruction, the processor 110 displays feedback of the operation instruction on both the floating screen and the UI of the screen 194, so that content displayed on the two screens remains the same.

In this embodiment of this application, it is considered that the two hands of the user use the mobile phone in turn. In this case, the processor 110 obtains a position of a holding point when the left hand of the user holds the mobile phone and a position of a holding point when the right hand of the user holds the mobile phone. Then, a comfort zone generated by the left-hand holding point and a comfort zone generated by the right-hand holding point are formed on the screen 194 with reference to the length of the thumb of the user (generally, the two hands of the user are of a same size, and therefore the left hand and the right hand are not distinguished herein). The processor 110 uses an overlapping region of the two comfort zones as a region for displaying the floating screen. In this way, the displayed floating screen may enable the user to perform an operation by using the left hand, or may enable the user to perform an operation by using the right hand.

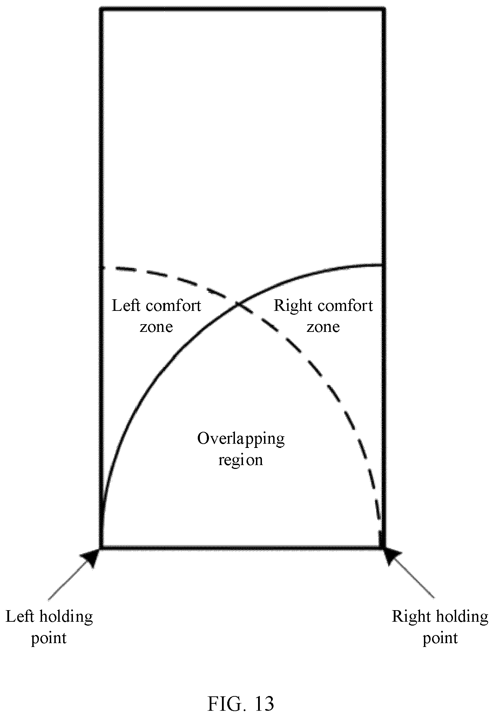

For example, as shown in FIG. 13, when the right hand of the user holds the mobile phone, a right holding point is obtained, and when the left hand of the user holds the mobile phone, a left holding point is obtained. The two holding points are respectively located at the bottom-right corner and the bottom-left corner of the screen 194. In this case, the processor 110 forms, on the screen 194, a right comfort zone of a 1/4 circular region using the bottom-right corner of the screen 194 as a circle center and the length of the thumb as a radius, and a left comfort zone of a 1/4 circular region using the bottom-left corner of the screen 194 as a circle center and the length of the thumb as a radius. An overlapping region is formed between the right comfort zone and the left comfort zone.

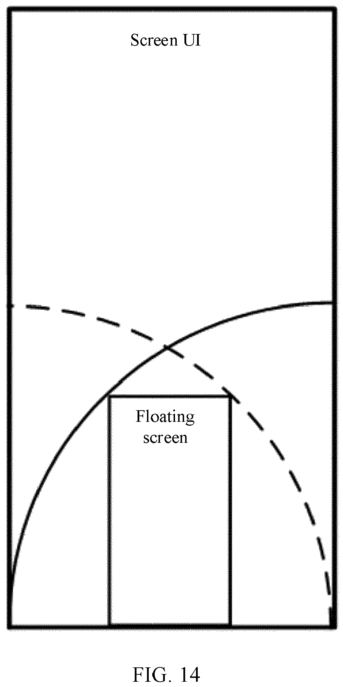

When enabling the "floating screen" function, the processor 110 displays a floating screen in the overlapping region on the screen 194, as shown in FIG. 14. Because the aspect ratio of the floating screen is the same as that of the UI of the screen 194, the bottom edge of the floating screen coincides with the bottom edge of the screen 194, the top-left corner of the floating screen is located on an edge of the comfort zone formed by using the bottom-right corner of the screen 194 as a holding point, and the top-right corner of the floating screen is located on an edge of the comfort zone formed by using the bottom-left corner of the screen 194 as a holding point. In this way, an area of the formed floating screen is the largest.

In this embodiment of this application, the processor 110 obtains the length of the thumb of the user and the position of the holding point, calculates a region and a position that can be operated by the user on the screen 194, and then displays the floating screen in the region. Because a presented position of the floating screen is within a maximum operable range of the user, the user can perform an operation at any position on the floating screen, so that the user can operate a large-screen device with one hand.

**Embodiment 2**

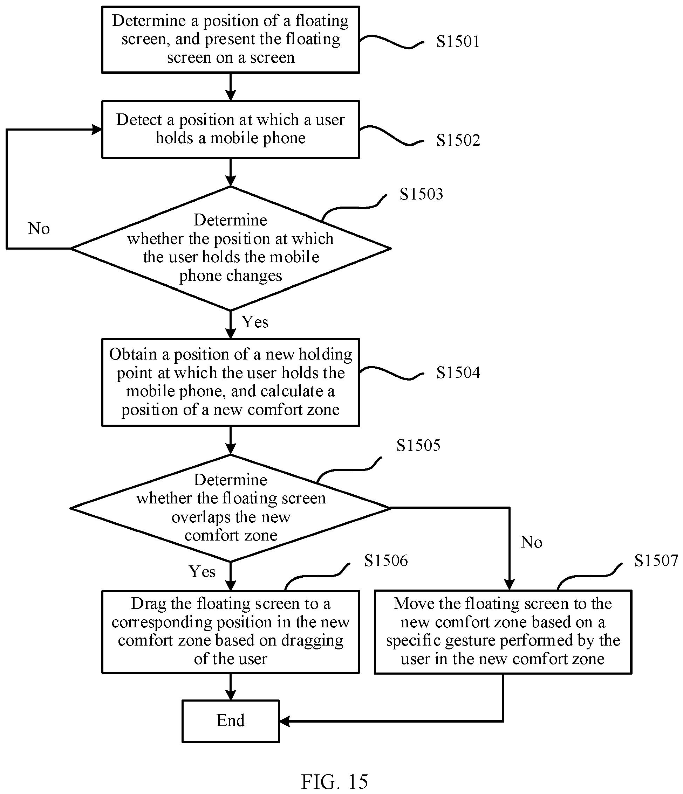

FIG. 15 is a flowchart of a floating screen gesture-following method according to an embodiment of this application. As shown in FIG. 15, a specific implementation procedure in which the mobile phone 100 performs floating screen gesture-following is as follows:

Step S1501: After determining a specific position and a size of an enabled floating screen presented on the screen 194, the mobile phone 100 presents the floating screen at the corresponding position on the screen 194.

Step S1502: The mobile phone 100 detects, in real time, a position at which the user holds the mobile phone.

Specifically, after the mobile phone 100 determines, based on the length of the thumb and the position of the holding point O1, the specific position and the size of the enabled floating screen presented on the screen 194, the floating screen is presented at the corresponding position on the screen 194. When the position at which the user holds the mobile phone changes, that is, the position of the holding point changes, the processor 110 re-detects the position of the holding point at which the user holds the mobile phone. After determining a position of a new holding point O2, the processor 110 determines a new comfort zone on the screen 194 based on the length of the thumb and the new holding point O2.

When the mobile phone 100 re-detects the position of the holding point, the holding point at which the user holds the mobile phone 100 may be determined in the manners correspondingly described in FIG. 3, FIG. 9, and FIG. 10, or the holding point at which the user holds the mobile phone 100 may be determined in a manner such as detecting a temperature of the hand by using the temperature sensor 180J or detecting holding pressure by using the pressure sensor.

Step S1503: The mobile phone 100 determines whether the position at which the user holds the mobile phone changes, where if it is detected that the position at which the user holds the mobile phone 100 does not change, step S1502 is performed, or if it is detected that the position at which the user holds the mobile phone 100 changes, step S1504 is performed.

Step S1504: The mobile phone 100 obtains the position of the new holding point at which the user holds the mobile phone, and determines a position of the new comfort zone on the screen 194 with reference to the length of the thumb of the user.

After re-determining, based on the length of the thumb and the position of the new holding point O2, the specific position and the size of the enabled floating screen presented on the screen 194, the mobile phone 100 determines the position of the new comfort zone on the screen 194. Then, the user may move the floating screen to the new comfort zone in a manner such as dragging the floating screen, double-tapping the new comfort zone, or touching and holding the new comfort zone.

In addition, after determining the position of the new comfort zone on the screen 194 based on the length of the thumb and the position of the new holding point O2, the mobile phone displays another color, a surrounding display boundary, or the like at the position of the new comfort zone on the screen 194, so that the user knows the position of the new comfort zone on the screen 19. Step S1505: The mobile phone determines whether the floating screen overlaps the new comfort zone, where if the floating screen overlaps the new comfort zone, step S1506 is performed, or if the floating screen does not overlap the new comfort zone, step S1507 is performed.

Step S 1506: The mobile phone drags the floating screen to a corresponding position in the new comfort zone based on dragging of the user.

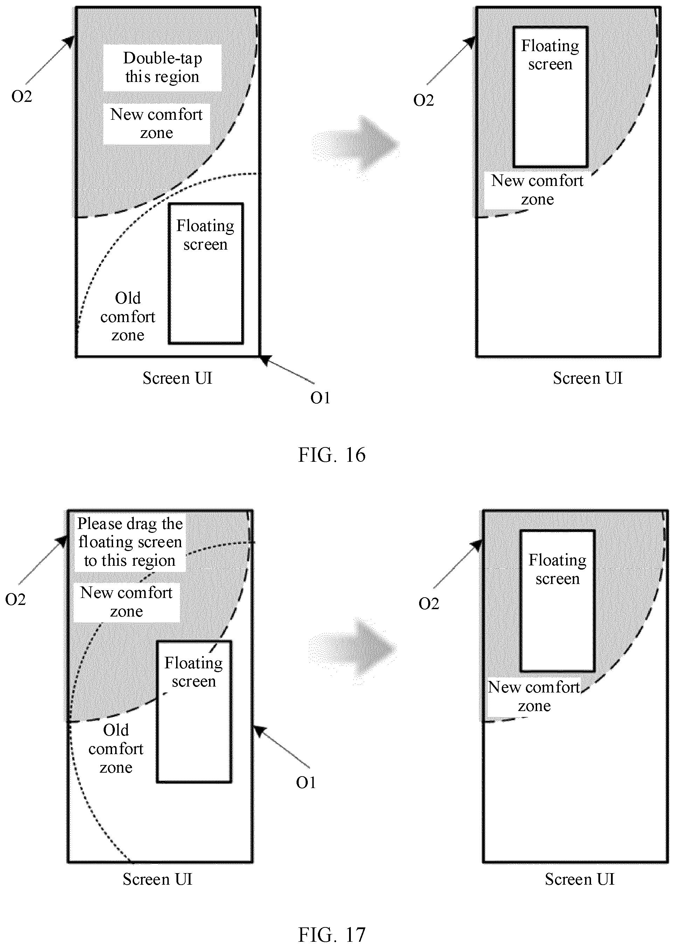

For example, as shown in FIG. 16, when a new comfort zone of another color is displayed on the screen 194, the mobile phone indicates to the user that a position at which the mobile phone 100 is held changes. If a floating screen currently displayed on the screen 194 is not in the new comfort zone, and a part of the floating screen overlaps the new comfort zone, the mobile phone may display a caption "Please drag the floating screen to the region" in the new comfort zone, to indicate the user to drag the floating screen to a position in the comfort zone. The user drags the floating screen by tapping the screen 194, to drag the floating screen to any position in the new comfort zone, or drag a part of the floating screen to the new comfort zone, or even drag the floating screen to another position on the screen 194.

Certainly, when the user performs a specific gesture such as double-tapping, touching and holding, or drawing a small circle in the new comfort zone, the floating screen may be moved to the new comfort zone. This is not limited in this application.

In addition, a last displayed position of the dragged floating screen is an end position of the drag operation. When the user drags the floating screen on the screen, a moved distance and track of the floating screen on the screen are a dragged distance and track of the user on the screen.

Step S1507: The mobile phone moves the floating screen to the new comfort zone by the user performing the specific gesture such as double-tapping, touching and holding, or drawing a small circle in the new comfort zone.

For example, as shown in FIG. 17, when a new comfort zone of another color is displayed on the screen 194, the mobile phone indicates to the user that a position at which the mobile phone 100 is held changes. If a floating screen currently displayed on the screen 194 is not in the new comfort zone and does not overlap the new comfort zone, the mobile phone 100 may display a caption "Please double-tap the region" in the new comfort zone, to indicate the user to double-tap the new comfort zone. After receiving a "double-tapping" operation instruction, the mobile phone moves the floating screen to the new comfort zone.

In this case, a size of the floating screen displayed in the new comfort zone may be the same as the size of the previously displayed floating screen, or the floating screen displayed in the new comfort zone may be displayed in a shape of a maximum size.

Certainly, the mobile phone may move the floating screen in response to a specific gesture such as touching and holding or drawing a small circle, or may move the floating screen in response to dragging of the user. This is not limited herein in this application.

In this embodiment of this application, the position at which the user holds the mobile phone is detected in real time. When it is detected that the position at which the user holds the mobile phone changes, a comfort zone is re-determined, and then the floating screen is moved to the new comfort zone, to ensure that the user can operate at any position on the floating screen with one hand.

## Embodiment 3

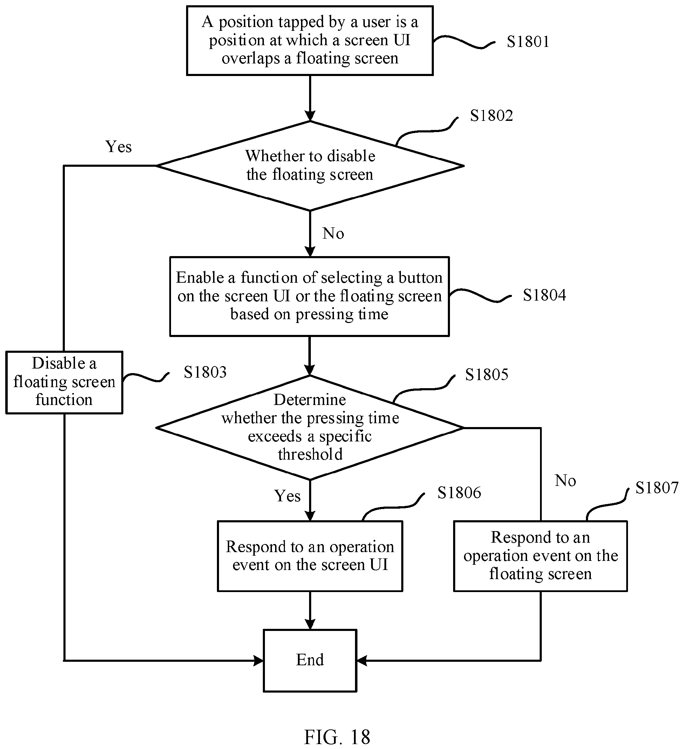

FIG. 18 is a flowchart of a method for resolving a conflict between the floating screen and the UI of the screen 194 according to an embodiment of this application. As shown in FIG. 18, a specific implementation procedure in which the mobile phone 100 resolves the conflict between the floating screen and the UI of the screen 194 is as follows:

Step S1801: The mobile phone 100 receives that when the user performs an operation, a tapping position is a position at which the UI of the screen 194 overlaps the floating screen.

Step S1802: The mobile phone 100 prompts the user whether to disable the floating screen, where when the user chooses to disable the floating screen, step S1803 is performed, or when the user chooses not to disable the floating screen, step S1804 is performed.

In this embodiment of this application, when the user performs an operation on the screen 194, because a position of the floating screen is on the UI of the screen 194, if a position at which the user performs the operation on the UI of the screen 194 coincides with the position of the floating screen, the floating screen conflicts with the UI of the screen 194. To resolve the problem that the position at which the user performs the operation on the UI of the screen 194 coincides with the floating screen, the user may actively disable the floating screen or move the floating screen to another position. In this way, the floating screen is prevented from interfering with the operation performed by the user on the UI of the screen 194.

Step S1803: The mobile phone 100 disables the floating screen function after receiving a floating screen disabling instruction from the user.

After disabling the "floating screen" function, the user may directly perform an operation on the screen UI, and the mobile phone 100 directly responds to an operation event on the UI of the screen 194. A method for disabling the floating screen may be tapping a floating screen disabling button (similar to "X" in the top-right corner of a Windows program), a shortcut key (for example, double-tapping a power button), or the like. This is not limited in this embodiment of this application.

Step S1804: The mobile phone 100 enables a function of selecting a button on the UI of the screen 194 or the floating screen at a corresponding position based on pressing time.

Step S1805: The mobile phone 100 detects time for pressing the screen 194 when the user taps the screen 194, and determines whether the pressing time exceeds a specific threshold, where when the pressing time exceeds the specific threshold, step S1806 is performed, or when the pressing time does not exceed the specific threshold, step S1807 is performed.

The processor 110 may further determine, based on time for which each operation is pressed on the screen 194 when the operation is performed, whether the user performs the operation on the floating screen interface or on the UI of the screen 194. When the pressing time exceeds the specific threshold, the processor 110 determines that the operation event is an operation performed on the UI of the screen 194. Alternatively, when the pressing time does not exceed the specific threshold, the processor 110 determines that the operation event is an operation performed on the floating screen.

In addition, a virtual indication identifier is disposed on each of the UI of the screen 194 and the floating screen. When an operation of the user is received on the UI of the screen 194 or the floating screen, the virtual indication identifier is changed from one color to another color, to prompt the user that this tapping operation is performed on the UI of the screen 194 or the floating screen.

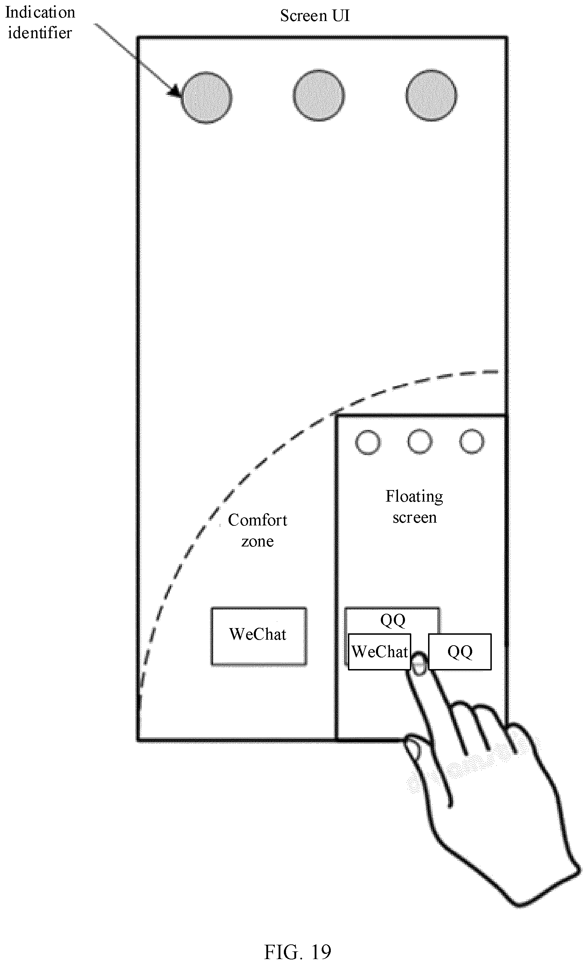

For example, as shown in FIG. 19, when the mobile phone enables the floating screen, three circular virtual indication identifiers are presented on each of the UI of the screen 194 and the floating screen. When the user performs an operation at the position at which the UI of the screen 194 overlaps the floating screen, the processor 110 determines whether time for this tap exceeds the preset time. When the time for this tap exceeds the preset time, the indication identifier on the UI of the screen 194 changes from white to another color, and a color of the indication identifier on the floating screen remains unchanged. Alternatively, when the time for this tap does not exceed the preset time, the indication identifier on the floating screen changes from white to another color, and a color of the indication identifier on the UI of the screen 194 remains unchanged. Step S1806: The mobile phone 100 responds to the operation event on the UI of the screen 194.

Step S1807: The mobile phone 100 responds to the operation event on the floating screen.

In addition, in this embodiment of this application, the mobile phone 100 may further detect a pressing force applied to the screen 194 when the user taps the screen 194, and determine whether the pressing force exceeds a specific threshold. When the screen 194 is pressed with a force greater than the preset threshold, the mobile phone 100 responds to the operation event on the UI of the screen 194. Alternatively, when the screen 194 is pressed with a force not greater than the preset threshold, the mobile phone 100 responds to the operation event on the floating screen. This is not limited herein in this application.

In this embodiment of this application, when the user performs an operation on the UI of the screen 194, a tapping position is an overlapping region between the UI of the screen 194 and the floating screen. To avoid an operation conflict, the mobile phone 100 first prompts the user whether to disable the floating screen. If the user does not disable the floating screen, the mobile phone 100 determines, based on pressing time of the user, whether the tap is an operation on the UI of the screen 194 or an operation on the floating screen.

**Embodiment 4**

After the floating screen function is enabled, if a size of a floating screen presented on the screen 194 does not meet a size required by the user, the user may scale up or scale down the floating screen.

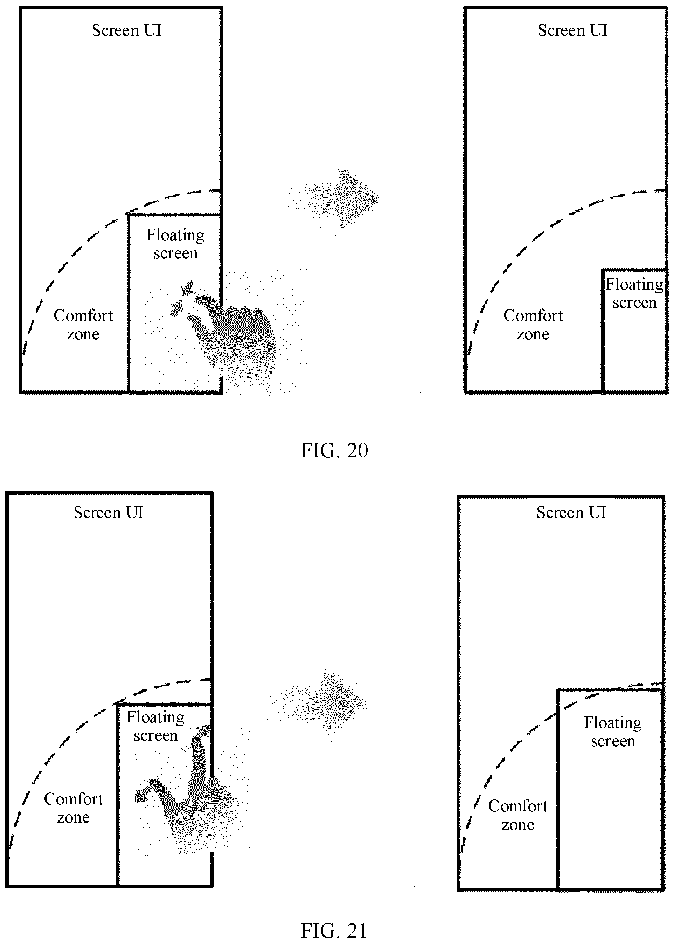

For example, as shown in FIG. 20, when the user needs to scale up an originally displayed floating screen, the user places two fingers on the floating screen, and then slides the two fingers on the screen 194 in opposite directions. In this case, after receiving a scaling-up instruction, the processor 110 scales up a display size of the floating screen. A position of a scaled-up floating screen may be in the comfort zone, or may exceed a range of the comfort zone. This is not limited in this embodiment of this application.

For example, as shown in FIG. 21, when the user needs to scale down the originally displayed floating screen, the user places two fingers on the floating screen, and then slides the two fingers on the screen 194 in mutual approaching directions. In this case, after receiving a scaling-down instruction, the processor 110 scales down the display size of the floating screen.

In this embodiment of this application, if the user is not satisfied with the size of the originally displayed floating screen, the user may perform a scaling-up or scaling-down operation on the floating screen by using a specific operation, so that the size of the displayed floating screen is a size required by the user.

An embodiment of this application discloses an electronic device, including a processor, and a memory, an input device, and an output device that are connected to the processor. The input device and the output device may be integrated into one device. For example, a touch panel of a screen may be used as the input device, and a display of the screen may be used as the output device.

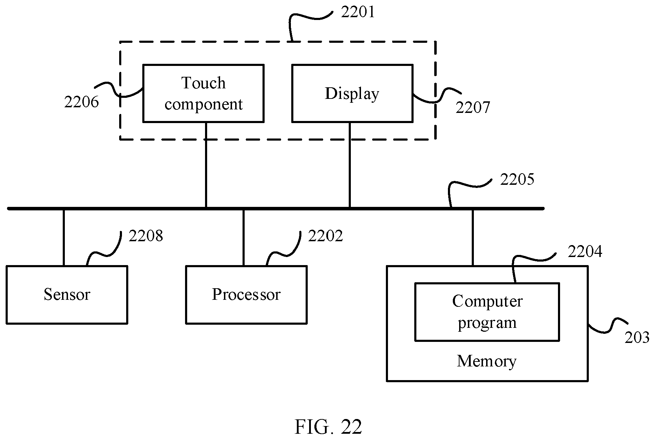

In this case, as shown in FIG. 22, the electronic device may include a screen 2201, where the screen 2201 includes a touch panel 2206 and a display 2207; one or more processors 2202; one or more memories 2203; one or more sensors 2208; one or more applications (not shown); and one or more computer programs 2204. The foregoing components may be connected by using one or more communication buses 2205. The one or more computer programs 2204 are stored in the memories 2203 and are configured to be executed by the one or more processors 2202. The one or more computer programs 2204 include instructions, and the instructions may be used to perform the steps in the corresponding embodiments. All related content of the steps in the foregoing method embodiments may be cited in function descriptions of corresponding physical components. Details are not described herein again.

For example, the processor 2202 may be specifically the processor 110 shown in FIG. 1, the memory 2203 may be specifically the internal memory 121 and/or the external memory 120 shown in FIG. 1, the screen 2201 may be specifically the screen 194 shown in FIG. 1, and the sensor 2208 may be specifically the gyroscope sensor 180B, the acceleration sensor 180E, or the optical proximity sensor 180G that is in the sensor module 180 shown in FIG. 1, or may be one or more of an infrared sensor, a Hall effect sensor, or the like. This is not limited in embodiments of this application.

Based on the descriptions of the foregoing implementations, a person skilled in the art may clearly understand that for the purpose of convenient and brief description, division into the foregoing functional modules is merely used as an example for description. During actual application, the foregoing functions may be allocated to different functional modules for implementation based on a requirement, in other words, an inner structure of an apparatus is divided into different functional modules to implement all or a part of the functions described above. For a detailed working process of the foregoing system, apparatus, and units, refer to a corresponding process in the foregoing method embodiments, and details are not described herein again.

Functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of embodiments of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) or a processor to perform all or some of the steps of the methods described in embodiments of this application. The foregoing storage medium includes any medium that can store program code such as a flash memory, a removable hard disk, a read-only memory, a random access memory, a magnetic disk, or an optical disc.

The foregoing descriptions are merely specific implementations of embodiments of this application, but are not intended to limit the protection scope of embodiments of this application. Any variation or replacement within the technical scope disclosed in embodiments of this application shall fall within the protection scope of embodiments of this application. Therefore, the protection scope of embodiments of this application shall be subject to the protection scope of the claims.

## Claims

1.   A one-hand operation method, performed by an electronic device, comprising:

   displaying a first interface, wherein the first interface occupies an entire screen of the electronic device;
   detecting a first trigger operation of a user; and
   displaying a floating interface based on the first trigger operation, wherein a size of the floating interface is less than a size of the first interface, the floating interface is located in a first region in which the user performs a one-hand operation on the screen, and the first region is determined by a position at which the user holds the electronic device and a length of a thumb of the user.

2.   The method according to claim 1, wherein the method further comprises:
   when the floating interface is a scaled-down first interface, skipping displaying the first interface on the screen.

3.   The method according to either of claims 1 and 2, wherein before the displaying a floating interface, the method further comprises:

   enabling at least one camera, and prompting the user to photograph an image of a hand; and

obtaining the length of the thumb of the user comprises: calculating the length of the thumb based on the image of the hand.

4. The method according to either of claims 1 and 2, wherein before the displaying a floating interface, the method further comprises:

enabling a fingerprint sensor, and prompting the user to collect fingerprint information; and
obtaining the length of the thumb of the user comprises: determining the length of the thumb based on a relationship between a size of a fingerprint and the length of the thumb.

5. The method according to either of claims 1 and 2, wherein before the displaying a floating interface, the method further comprises:

prompting the user to draw an arc on the screen when the user holds the electronic device with one hand, and obtaining a track of the arc; and
obtaining the length of the thumb of the user comprises: calculating the length of the thumb based on the track of the arc.

6. The method according to any one of claims 1 to 5, wherein before the displaying a floating interface, the method further comprises:

prompting the user to draw the arc on the screen when the user holds the electronic device with one hand, and obtaining the track of the arc; and
obtaining the position at which the user holds the electronic device comprises: calculating, based on the track of the arc, the position at which the user holds the electronic device.

7. The method according to any one of claims 1 to 5, wherein before the displaying a floating interface, the method further comprises: obtaining at least one operation point at which the user performs an operation on the screen in a period of time; and
obtaining the position at which the user holds the electronic device comprises: calculating, based on the at least one operation point, the position at which the user holds the electronic device.

8. The method according to claim 7, wherein the calculating, based on the operation point, the position at which the user holds the electronic device comprises:
determining, based on a position of the at least one operation point on the screen, a circle center of one of N circles that covers a maximum quantity of the at least one operation point as a position of a holding point, wherein the N circles are circles on the screen that use N screen edge positions on the screen as circle centers and use the length of the thumb as a radius, N is an integer greater than 2, and the holding point is a position at which a palm or the thumb contacts with an edge of the screen when the user holds a mobile phone.

9. The method according to any one of claims 1 to 8, wherein determining the first region comprises:

determining, based on the position at which the user holds the electronic device, the holding point at which the palm or the thumb contacts with the edge of the screen when the user holds the mobile phone; and
using, as the first region, a region formed on the screen by using the holding point as a circle center and the length of the thumb as a radius.

10. The method according to any one of claims 1 to 8, wherein determining the first region comprises:

determining, based on at least two positions at which the user holds the electronic device, at least two holding points at which the palm or the thumb contacts with the edge of the screen when the user holds the mobile phone; and
using, as the first region, an overlapping region between at least two regions formed on the screen by using the at least two holding points as circle centers and the length of the thumb as a radius.

11. The method according to any one of claims 1 to 10, wherein the floating interface is displayed in the first region in a shape of a maximum size, and the shape of the floating interface is the same as a shape of the first interface.

12. The method according to any one of claims 1 to 11, wherein the method further comprises:
detecting that the position at which the user holds the electronic device changes, determining a second region based on an updated position at which the user holds the electronic device and the length of the thumb, and displaying the second region on the first interface.

13. The method according to claim 12, wherein the method further comprises:
detecting that the user performs a tap operation in the second region, and displaying the floating interface in the second region in response to the tap operation.

14. The method according to claim 12, wherein the method further comprises:
detecting that the user performs a tap operation in the second region, and when the floating interface does not overlap the second region, displaying the floating interface in the second region in response to the tap operation.

15. The method according to claim 12, wherein the method further comprises:
detecting a drag operation of moving the floating interface from the first region to the second region by the user, and displaying the floating interface at an end position of the drag operation in response to the drag operation.

16. The method according to claim 12, wherein the method further comprises:
detecting a drag operation of moving the floating interface from the first region to the second region by the user, and when the floating interface overlaps the second region, displaying the floating interface at an end position of the drag operation in response to the drag operation.

17. The method according to any one of claims 1 to 16, wherein the method further comprises:

detecting an operation performed on a first position, wherein the floating interface comprises a first control, the first interface comprises a second control, a position at which the first control is displayed on the screen is the first position, a position at which the second control is displayed on the screen is a second position, and the first position and the second position at least partially overlap;
prompting whether to disable display of the floating interface; and
skipping displaying the floating interface if a display disabling instruction is received, and responding, by an application corresponding to the first interface, to the operation performed on the first position, and displaying a corresponding interface based on the second control.

18. The method according to claim 17, wherein the method further comprises:

if the display disabling instruction is not received, determining whether at least one of a pressure value or duration of an operation that triggers the first control is greater than a specific value;
if at least one of the pressure value or the duration of the operation that triggers the first control is greater than the specific value, responding, by the application corresponding to the first interface, to the operation performed on the first position, and displaying the corresponding interface based on the second control; or
if at least one of the pressure value or the duration of the operation that triggers the first control is not greater than the specific value, responding, by the application corresponding to the floating interface, to the operation performed on the first position, and displaying a corresponding interface in a region occupied by the floating interface based on the first control.

19. The method according to any one of claims 1 to 18, wherein the method further comprises:

when it is detected that there are at least two operation points performed on the floating interface at a same time, and positions of the at least two operation points become farther as time changes, scaling up the size of the floating interface; or
when it is detected that there are at least two operation points performed on the floating interface at a same time, and positions of the at least two operation points become closer as time changes, scaling down the size of the floating interface.

20. An electronic device, comprising:

a screen, configured to: display a first interface, wherein the first interface occupies the entire screen of the electronic device; and display a floating interface based on a first trigger operation;

one or more processors;

one or more memories;

one or more sensors; and

one or more computer programs, wherein the one or more computer programs are stored in the one or more memories, the one or more computer programs comprise instructions, and when the instructions are executed by the electronic device, the electronic device is enabled to perform the display method according to any one of claims 1 to 19.

21. A computer-readable storage medium, wherein the computer-readable storage medium stores instructions, and when the instructions are run on an electronic device, the electronic device is enabled to perform the display method according to any one of claims 1 to 19.

22. A computer program product comprising instructions, wherein when the computer program product runs on an electronic device, the electronic device is enabled to perform the display method according to any one of claims 1 to 19.

Mobile phone 100

| | | | | | Sensor module [180] |
|---|---|---|---|---|---|

Antenna 1  Antenna 2

| Speaker [170A] | Receiver [170B] | Microphone [170C] | Headset jack [170D] |
|---|---|---|---|

| Radio frequency module 2G/3G/4G/5G [150] | Communication module BT/WLAN/GNSS/NFC/IR/FM [160] | Audio module [170] |
|---|---|---|

Pressure sensor [180A]

Gyroscope sensor [180B]

Barometric pressure sensor [180C]

Magnetic sensor [180D]

| SIM card interfaces 1 to N [195] |
|---|

Acceleration sensor [180E]

| Internal memory [121] |
|---|

Distance sensor [180F]

Processor

[110]

| External memory interface [120] |
|---|

Optical proximity sensor [180G]

Charging input

Fingerprint sensor [180H]

| USB port [130] |
|---|

Temperature sensor [180J]

Touch sensor [180K]

| Charging management module [140] |
|---|

Ambient light sensor [180L]

| Battery [142] | Power management module [141] | Screen [194] | Cameras 1 to N [193] | Indicator [192] | Motor [191] | Button [190] |
|---|---|---|---|---|---|---|

Bone conduction sensor [180M]

FIG. 1

FIG. 2

FIG. 3

Screen UI

Comfort zone

FIG. 4

FIG. 5

| Application layer | Camera | Calendar | Map | Bluetooth | Music | Messages |
|---|---|---|---|---|---|---|
| | Gallery | Phone | Navigation | Videos | ... | |

| Application framework layer | Window manager | Content provider | Phone manager | Resource manager |
|---|---|---|---|---|
| | Display management service | Display policy service | ... | |

| System library | Status monitoring service | Two/Three-dimensional graphics processing library | Android runtime |
|---|---|---|---|
| | Surface manager | Media library | ... | |

| Kernel layer | Display driver | Camera driver | Fingerprint recognition driver |
|---|---|---|---|
| | Audio driver | Sensor driver | ... |

Underlying system

FIG. 6

Mobile phone 100

FIG. 7

FIG. 8

Please determine an
origin of a holding
position
(please tap a white region
around the screen)

FIG. 9

EP 4 053 688 A1

Screen UI

Comfort zone

Holding point

FIG. 10

30

Screen UI

Floating
screen

| WeChat | QQ |

WeChat

QQ

Comfort zone

Holding
point

FIG. 11a

EP 4 053 688 A1

Mobile phone 100

WeChat +

Search

QQ email reminder 20:15
Jianshu: Comment replied

Subscriptions
Honghebiji: I want to 19:38
talk to you today

Dad 19:20
[Sticker]

Mom Yesterday
Do not stay up too late

Xiao Zhang Yesterday
OK

Xiao Li Yesterday
[Video]

Xiao Zhao Yesterday
[Sticker]

WeChat  Contacts  Discovery  Me

FIG. 11b

FIG. 12

FIG. 13

FIG. 14

Determine a position of a floating screen, and present the floating screen on a screen — S1501

Detect a position at which a user holds a mobile phone — S1502

S1503

Determine whether the position at which the user holds the mobile phone changes

No

Yes

Obtain a position of a new holding point at which the user holds the mobile phone, and calculate a position of a new comfort zone — S1504

S1505

Determine whether the floating screen overlaps the new comfort zone

Yes

No

S1506

Drag the floating screen to a corresponding position in the new comfort zone based on dragging of the user

S1507

Move the floating screen to the new comfort zone based on a specific gesture performed by the user in the new comfort zone

End

FIG. 15

O2

Double-tap
this region

New comfort
zone

Floating
screen

Old
comfort
zone

Screen UI

O1

O2

Floating
screen

New comfort
zone

Screen UI

FIG. 16

O2

Please drag the
floating screen
to this region

New comfort
zone

Floating
screen

Old
comfort
zone

Screen UI

O1

O2

Floating
screen

New comfort
zone

Screen UI

FIG. 17

A position tapped by a user is a
position at which a screen UI
overlaps a floating screen ⟋ S1801

Whether to disable
the floating screen ⟋ S1802

Yes

No

Disable a
floating screen
function ⟋ S1803

Enable a function of selecting a button
on the screen UI or the floating screen
based on pressing time ⟋ S1804

Determine
whether the pressing time
exceeds a specific
threshold ⟋ S1805

Yes

No ⟋ S1807

Respond to an operation
event on the screen UI ⟋ S1806

Respond to an
operation event on the
floating screen

End

FIG. 18

Indication
identifier

Screen UI

Comfort
zone

Floating
screen

WeChat

QQ

WeChat

QQ

FIG. 19

FIG. 20

FIG. 21

FIG. 22

## INTERNATIONAL SEARCH REPORT

International application No.

**PCT/CN2020/128000**

### A. CLASSIFICATION OF SUBJECT MATTER

G06F 3/0481(2013.01)i

According to International Patent Classification (IPC) or to both national classification and IPC

### B. FIELDS SEARCHED

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

WPI, EPODOC, CNPAT, CNKI, IEEE: 单手, 操作, 界面, 显示, 屏幕, 检测, 悬浮, 尺寸, 大小, 区域, 握持, 位置, 拇指, 长度, single, hand, operation, interface, display, screen, detect, float+, size, scale, region, hold, position, thumb, length

### C. DOCUMENTS CONSIDERED TO BE RELEVANT

| Category* | Citation of document, with indication, where appropriate, of the relevant passages | Relevant to claim No. |
|---|---|---|
| PX | CN 111124201 A (HUAWEI TECHNOLOGIES CO., LTD.) 08 May 2020 (2020-05-08) claims 1-22 | 1-22 |
| Y | CN 106445354 A (BEIJING XIAOMI MOBILE SOFTWARE CO., LTD.) 22 February 2017 (2017-02-22) description, paragraphs [0032]-[0085], and figure 2 | 1-22 |
| Y | CN 103619243 A (MURATA MANUFACTURING CO., LTD.) 05 March 2014 (2014-03-05) description, paragraphs [0084]-[0088] | 1-22 |
| A | CN 109164965 A (QIKU INTERNET NETWORK SCIENTIFIC (SHENZHEN) CO., LTD.) 08 January 2019 (2019-01-08) entire document | 1-22 |
| A | CN 110262749 A (BEIJING SIWEI CREATED BEING INFORMATION TECHNOLOGY CO., LTD.) 20 September 2019 (2019-09-20) entire document | 1-22 |
| A | US 2014145975 A1 (SAMSUNG ELECTRO-MECHANICS CO., LTD.) 29 May 2014 (2014-05-29) entire document | 1-22 |

☐ Further documents are listed in the continuation of Box C.   ☑ See patent family annex.

| | | |
|---|---|---|
| * Special categories of cited documents: | "T" | later document published after the international filing date or priority date and not in conflict with the application but cited to understand the principle or theory underlying the invention |
| "A" document defining the general state of the art which is not considered to be of particular relevance | | |
| "E" earlier application or patent but published on or after the international filing date | "X" | document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | | |
| "P" document published prior to the international filing date but later than the priority date claimed | "&" | document member of the same patent family |

| Date of the actual completion of the international search | Date of mailing of the international search report |
|---|---|
| **30 January 2021** | **10 February 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

EP 4 053 688 A1

INTERNATIONAL SEARCH REPORT
Information on patent family members

International application No.

**PCT/CN2020/128000**

| Patent document cited in search report | | | Publication date (day/month/year) | Patent family member(s) | | | Publication date (day/month/year) |
|---|---|---|---|---|---|---|---|
| CN | 111124201 | A | 08 May 2020 | None | | | |
| CN | 106445354 | A | 22 February 2017 | None | | | |
| CN | 103619243 | A | 05 March 2014 | CN | 104799824 | A | 29 July 2015 |
| | | | | WO | 2012176371 | A1 | 27 December 2012 |
| | | | | EP | 2724667 | A1 | 30 April 2014 |
| | | | | JP | WO2012176371 | A1 | 23 February 2015 |
| | | | | US | 2014106816 | A1 | 17 April 2014 |
| CN | 109164965 | A | 08 January 2019 | None | | | |
| CN | 110262749 | A | 20 September 2019 | None | | | |
| US | 2014145975 | A1 | 29 May 2014 | KR | 20140067473 | A | 05 June 2014 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201911203234